# EUROPÄISCHE PATENTSCHRIFT

(11) **EP 0 425 442 B1**
(45) Veröffentlichungstag und Bekanntmachung des Hinweises auf die Patenterteilung: **27.12.1995**
(21) Anmeldenummer: 90810804.6
(22) Anmeldetag: 19.10.1990
(51) Int. Cl.: C09B 67/46

(54) **Wässrige Farbstoff-Präparate**
Aqueous dyestuff preparations
Préparations tinctoriales aqueuses

(30) Priorität: 27.10.1989 CH 3900/89
(43) Veröffentlichungstag der Anmeldung: 02.05.1991
(73) Patentinhaber: CIBA-GEIGY AG, 4002 Basel (CH)
(72) Erfinder: Koci, Zdenek, Dr., CH-4102 Binningen (CH)

(56) Entgegenhaltungen:
- EP-A- 0 323 401
- EP-A- 0 430 871

## Beschreibung

Die vorliegende Erfindung betrifft wässrige Farbstoff-Präparate, ein Verfahren zu deren Herstellung und deren Verwendung zum Färben, insbesondere zum kontinuierlichen Färben, oder Bedrucken von Textilmaterialien sowie das gefärbte Material.

Es ist bekannt, dass zum Färben bzw. Bedrucken von Textilmaterialien aus Polyester (PES) oder bevorzugt aus Mischungen von Polyester mit anderen Fasern, insbesondere von Naturfasern, wie z.B. PES/Cellulose-Fasern (PES/Cel), Dispersionsfarbstoffe in flüssigen oder Pulver-(Granulat)-Handelsformen verwendet werden. Hierbei können zum gleichzeitigen Färben der z.B. Cellulose-Fasern verschiedene andere Farbstoffklassen wie Küpen-, Reaktiv-, Schwefel-, Leukoküpen-, Naphthol- oder Substantiv-Farbstoffe eingesetzt werden.

Aus Produktivitäts- und Kosten-Gründen werden heute PES/Cel-Färbungen vorteilhaft in einbadigen kontinuierlichen Färbeverfahren unter Zusatz von verschiedenen Hilfsmitteln durchgeführt. Alle diese Verfahren stellen z.B. an die physikalischen, chemischen und applikatorischen Eigenschaften der Dispersionsfarbstoff-Präparate sehr hohe Ansprüche, die bisher nur zum Teil erfüllt werden konnten.

Es werden insbesondere solche Dispersionsfarbstoff-Präparate verlangt, die eine allgemein gute Lagerstabilität aufweisen. Die Präparate sollen während der Lagerung nicht agglomerieren (sonst Stippenbildung bei der Färbung) und sehr gut stabil gegen Austrocknen (gut redispergierbar) sein. Weiterhin wird verlangt, dass die Präparate in der Färbeflotte stabil sind, nicht schäumen und den Nicht-PES-Faseranteil nicht anschmutzen bzw. bei einer Anschmutzung dieses Faseranteils leicht auswaschbar sind.

Bei der Verwendung von Dispersionsfarbstoff-Präparaten zusammen in einem Färbeapplikationsbad mit verschiedenen Typen von Reaktivfarbstoffen für die Cellulosefärbung wird ferner verlangt, dass die Farb-Ausbeute der Reaktivfarbstoffe, insbesondere wenn diese hochreaktiv sind, nicht wesentlich durch die Dispersionsfarbstoff-Präparate beeinträchtigt wird. Schliesslich werden egale Färbungen verlangt, die bei den kontinuierlichen Färbeverfahren nur dann erreicht werden, wenn die Dispersionsfarbstoffe eine niedrige Migration aufweisen.

Es wurden nun übertaschenderweise spezifische wässrige Farbstoff-Präparate gefunden, die neben dem in Wasser unlöslichen bis schwerlöslichen Farbstoff eine Mischung eines anionischen Dispergators, der keine Hydroxy- oder Amino-Gruppen enthält und vorzugsweise in einer salzarmen und relativ hydrophoben (Verhältnis von Kohlenstoff zu organischem Schwefel > 15:1) Form vorliegt, mit Verbindungen der allgemeinen Formel (2) und zusätzlich mit einer Kombination aus Natriumlactat und Glycerin und/oder Propylenglykol enthalten, welche die vorstehend genannten Anforderungen gleichzeitig erfüllen. Diese Farbstoffpräparate weisen insbesondere neben einer guten Lagerstabilität und Redispergierbarkeit auch gute applikatorische Eigenschaften auf.

Die vorliegende Erfindung betrifft somit wässrige Farbstoffpräparate von in Wasser unlöslichen bzw. schwer löslichen Farbstoffen, enthaltend
15-40 Gew.% Farbstoff,
3-18 Gew.% anionischen Dispergator der allgemeinen Formel 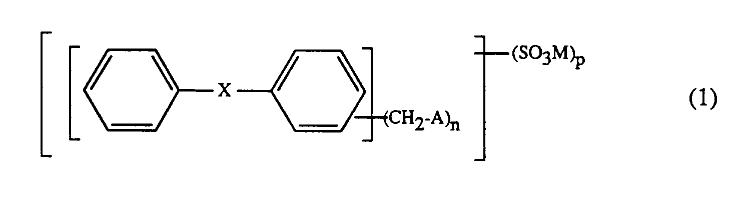
worin
- X: die direkte Bindung oder Sauerstoff
- A: Wasserstoff oder den Rest einer aromatischen Verbindung, welcher mittels eines Ringkohlenstoffatoms an die Methylengruppe gebunden ist und keine Hydroxy- oder Aminosubstituenten aufweist
n und p unabhängig voneinander je eine Zahl von 1 bis 4 und
M ein einwertiges Kation
bedeuten, und gegebenenfalls Kondensate dieser Verbindungen mit Formaldehyd
1-10 Gew.% Na-Lactat
1-10 Gew.% Glyzerin und/oder Propylenglykol
0,1-5,0 Gew.% einer Verbindung mit den monomeren Einheiten der allgemeinen Formel 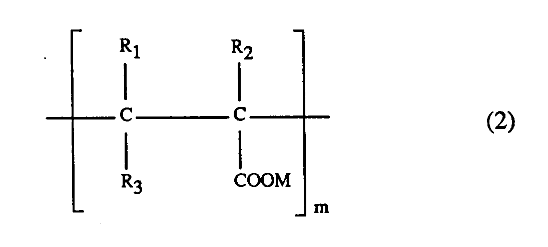
worin
R₁ H, C₁-C₃-Alkyl, COOM
R₂ H, C₁-C₃-Alkyl,
R₃ H, C₁-C₃-Alkyl, CH₂COOM
M ein einwertiges Kation und
m eine Zahl von 8-1000
bedeuten,
3-10 Gew.% Betain-Monohydrat,
0- 4 Gew.% einer Verbindung mit den monomeren Einheiten der allgemeinen Formel 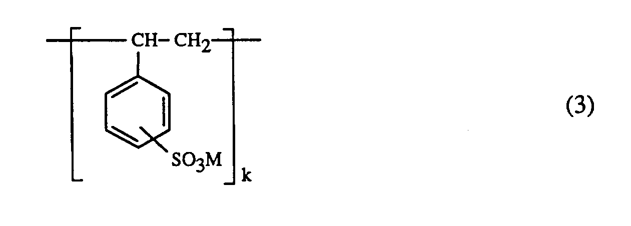
worin
M ein einwertiges Kation und
k eine Zahl von 50 bis 3000
bedeuten, und
0,1-15 Gew.% übliche Hilfsmittel enthalten.

Als erfindungsgemäss verwendbare anionische Dispergatoren, die keine Hydroxy- oder Amino-Gruppen enthalten, werden sulfonierte Kondensationsprodukte der allgemeinen Formel 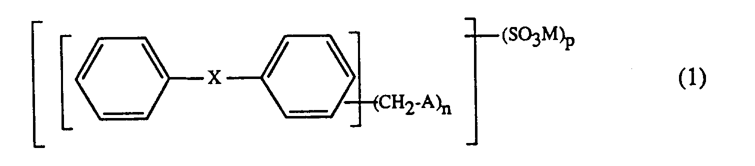
verwendet, worin X die direkte Bindung oder Sauerstoff, A Wasserstoff oder den Rest einer aromatischen Verbindung, welcher mittels eines Ringkohlenstoffatoms an die Methylengruppe gebunden ist und welche keine Hydroxy- oder Aminosubstituenten aufweist, M ein einwertiges Kation, und n und p unabhängig voneinander je eine Zahl von 1 bis 4 bedeuten, sowie gegebenenfalls Kondensate dieser Verbindungen mit Formaldehyd.

M bedeutet vorzugsweise Na, K, Li oder Triethanolamin.

In der Regel sind die Werte für n und p ganzzahlig. Sie können auch eine beliebige gebrochene Zahl im Bereich von 1 bis 4 bedeuten, z:B. 1,4, 1,8, 2,1 oder 3,2. Bevorzugt sind n und p unabhängig voneinander 1 oder 2.

Bedeutet A in der Formel (1) Wasserstoff so handelt es sich vor allem um ein Di-Tolyläthersulfonsäure-Formaldehyd-Kondensationsprodukt.

Insbesondere verwendet man jedoch einen anionischen Dispergator der allgemeinen Formel 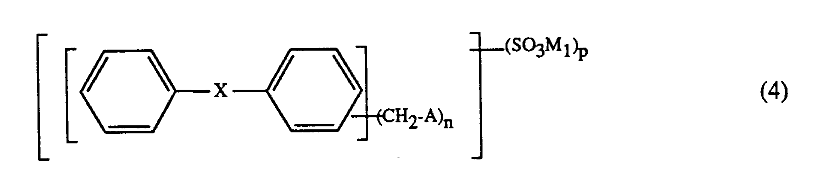
worin
- X: die direkte Bindung oder Sauerstoff,
- A: der Rest einer aromatischen Verbindung, welcher mittels eines Ringkohlenstoffatoms an die Methylengruppe gebunden ist und keine Hydroxy- oder Aminosubstituenten aufweist,
n und p unabhängig voneinander je eine Zahl von 1 bis 4, und
M₁ Na, K, Li oder Triethanolamin
bedeuten.

Vorzugsweise verwendet man einen anionischen Dispergator der allgemeinen Formel 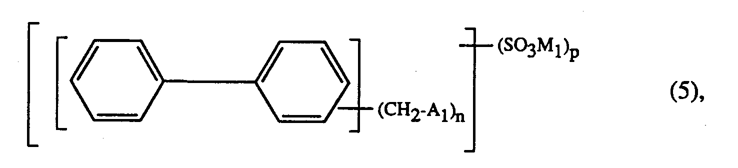
worin
- A₁: der Rest eines aromatischen Kohlenwasserstoffes, welcher mittels eines Ringkohlenstoffatoms an die Methylengruppe gebunden ist und keine Hydroxy- oder Aminosubstituenten aufweist,
n und p unabhängig voneinander je eine Zahl von 1 bis 4 und
M₁ Na, K, Li oder Triethanolamin
bedeuten.

Besonders bevorzugt verwendet man einen anionischen Dispergator der allgemeinen Formel 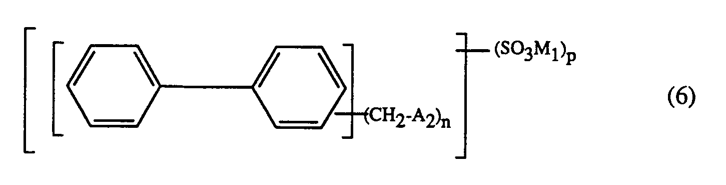
worin
- A₂: ein Naphthalinrest, welcher mittels eines Ringkohlenstoffatoms an die Methylengruppe gebunden ist und keine Hydroxy- oder Aminosubstituenten aufweist,
n und p unabhängig voneinander je eine Zahl von 1 bis 4 und
M₁ Na, K, Li oder Triethanolamin
bedeuten.

Die erfindungsgemäss verwendbaren sulfonierten Kondensationsprodukte werden zweckmässig so hergestellt, dass man eine mindestens zwei ersetzbare kernständige Wasserstoffatome aufweisende aromatische Verbindung, welche keine Hydroxy- oder Aminosubstituenten aufweist, mit einer Verbindung der allgemeinen Formel 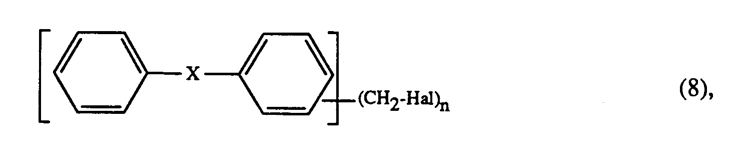
worin
X die direkte Bindung oder Sauerstoff
Hal Chlor oder Brom
n eine Zahl von 1 bis 4
bedeuten,
umsetzt und das Kondensationsprodukt sulfoniert. Man kann Kondensationsprodukte der angegebenen Art auch herstellen, indem man eine sulfonierte, mindestens zwei ersetzbare, kernständige Wasserstoffatome aufweisende aromatische Verbindung, welche keine Hydroxy- oder Aminosubstituenten aufweist, mit einer Verbindung der Formel (8) umsetzt.

Die bei der Herstellung der Kondensationsprodukte als Ausgangsstoffe dienenden, mindestens zwei ersetzbare Wasserstoffatome aufweisenden aromatischen Verbindungen können ein- oder mehrkernige, besonders zweikernige aromatische Kohlenwasserstoffe sein, die gegebenenfalls substituiert sind. Als Substituenten kommen z.B. Alkylgruppen mit 1 bis 4 Kohlenstoffatomen, Alkoxygruppen mit 1 bis 4 Kohlenstoffatomen oder Halogen, wie z.B. Chlor in Betracht. Bevorzugt sind Naphthalinverbindungen, die mit Chlor oder Methyl substituiert sein können. Als Beispiele für ein- und mehrkernige aromatische Verbindungen seien hier genannt: Alkylbenzole wie Toluol, Xylole, Isopropylbenzol, Isobutylbenzol, tert. Butylbenzol, Alkoxybenzol, wie Anisole, Phenetole, Butoxybenzol, weiter Diphenylalkane, Tetrahydronaphthalin, Naphthalin, Alkylnaphthaline, wie z.B. α- und β-Methylnaphthalin, sowie Acenaphthen, Anthracen, Perylen, Pyren und Dihydrophenanthren.

Besonders gut geeignet sind Naphthalin, oder Naphthalinsulfonsäuren. Selbstverständlich können auch Gemische dieser ein- und mehrkernigen aromatischen Verbindungen als Ausgangsstoffe verwendet werden.

Die ebenfalls als Ausgangsstoffe benötigten Verbindungen der Formel (8) werden z.B. durch Umsetzung von Diphenyl oder Diphenylether mit Formaldehyd und Halogenwasserstoff, wie Brom- oder vorzugsweise Chlorwasserstoff nach den in der US-A-3 004 072 oder IT-A-600 214 beschriebenen Methoden hergestellt.

Bevorzugte Ausgangsstoffe der Formel (8) sind Chlormethyldiphenyl und Chlormethyldiphenylether. Bei diesen Verbindungen handelt es sich meist um Isomerengemische mit 1 bis 3 Chlormethylgruppen, wobei sich z.B. die Chlormethylgruppen vorzugsweise in o- oder p-Stellung der beiden Benzolringe befinden. Demnach liegen auch die entsprechenden sulfonierten Kondensationsprodukte in der Regel als Gemische vor, insbesondere von mono- bis trisubstituierten Diphenyl- oder Diphenyletherprodukten. Je nach den Ausgangsmaterialien und den gewählten Reaktionsbedingungen bei der Herstellung der Kondensationprodukte ändert sich das Verhältnis der Isomeren zueinander.

Die sulfonierten Kondensationsprodukte sind in der DE-A-2353691 beschrieben.

Der erfindungsgemässe anionische Dispergator weist vorzugsweise ein Verhältnis von Kohlenstoff zu organisch gebundenem Schwefel von >15:1 auf. Der anionische Dispergator wird vorzugsweise in einer salzarmen Form verwendet, dies bedeutet, dass die Elektrolytmenge im trockenen Dispergator, als Na₂SO₄ ausgedrückt, unter 1 Gew.% beträgt..

Die zur Entsalzung des anionischen Dispergators bevorzugt verwendbaren Umkehrosmose (UO)-Membranen bestehen im wesentlichen aus einem organischen Polymer, der mindestens an der Oberfläche durch Reste mit ionischen Gruppen modifiziert ist. Es können in dieser Weise modifizierte natürliche, halbsynthetische oder synthetische Polymere zu Membranen verarbeitet werden. Ein derart zu modifizierender polymerer Stoff enthält als reaktionsfähige Atome oder Gruppen beispielsweise Hydroxyl-, Halogen-, Halogenalkyl- Amino- und/oder Amidoximgruppen. Er kann dann mit geeigneten Verbindungen umgesetzt werden, die einerseits ionische Gruppen und andererseits mindestens eine unter Bildung einer chemischen (kovalenten) Bindung reaktionsfähige Gruppierung enthalten.

Beispielsweise können folgende polymere Verbindungen in der angegebenen Weise modifiziert werden:
- Celluloseacetate, z.B. solche mit niedrigem Acetylgruppengehalt, aber auch höher acylierte Cellulose, z.B. sog. Zweieinhalbacetat,
- Polyvinylalkohole,
- Polyacrylnitril oder Copolymere aus Acrylnitril und anderen ethylenisch ungesättigten Monomeren,
- Polysulfone
- Polystyrole
- Polyamide oder
- Polyimide.

Solche Membranen sind beispielsweise aus den US-A-4 604 204, 4 584 103, 4 753 725, 4 690 766, 4 477 634 und 4 720 345 bekannt.

Die Membranen können verschiedene Formen aufweisen, z.B. plattenförmig, blattförmig, röhrenförmig, in Form einer Tasche, eines Konus oder von Hohlfasern vorliegen. Um sie wirkungsvoll zur Stofftrennung einsetzen zu können, müssen sie in entsprechende Systeme (Module) integriert werden und in Anlagen (für die Druckpermeation) eingebaut werden.

Bei den beschriebenen Membranen, die man zur Trennung/Aufreinigung der genannten Ausgangslösungen bzw. -Suspensionen nach dem Prinzip der Ultrafiltration einsetzt, handelt es sich im wesentlichen um solche, die Trenngrenzen im Molekulargewichtsbereich von 300 bis 800, vorzugsweise 400 bis 500, aufweisen und symmetrisch oder insbesondere asymmetrisch sind. Wasser und gelöste Stoffe, die auf Grund ihres Molekulargewichts unterhalb der Trenngrenze liegen, permeieren unter Anwenden eines geringen bis mittleren Drucks leicht durch diese Membranen. Erfindungsgemäss werden Drucke von 10 bis 100 bar und vorzugsweise von 10 bis 30 bar angewendet. Der Druck kann z.B. mittels einer Pumpe ausgeübt werden. pH-Werte und Temperaturen können bei der Durchführung des Verfahrens je nach der verwendeten Membrane in weiten Grenzen schwanken.

Man verwendet als Propylenglykol vorzugsweise 1,2-Propylenglykol.

Bevorzugte Verbindungen der Formel (2) sind solche mit den monomeren Einheiten der allgemeinen Formel 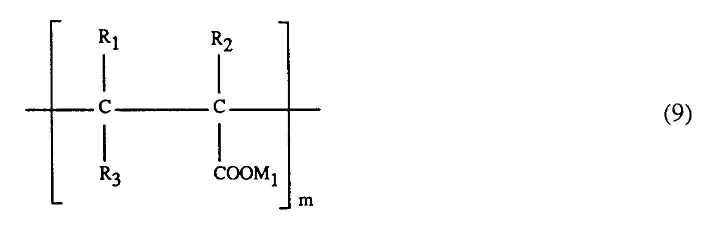
worin
R₁ H, C₁-C₃-Alkyl, -COOM,
R₂ H, C₁-C₃-Alkyl,
R₃ H, C₁-C₃-Alkyl, -CH₂COOM,
M₁ Na, K, Li, Triethanolamin und
m eine Zahl von 8 bis 1000
bedeuten.

Diese carboxylgruppenhaltigen Polymerisationsprodukte sind bekannt. Als bevorzugte Polymerisationsprodukte werden Homopolymerisate von Acryl-, Methacryl- oder Maleinsäure bzw. deren Copolymerisate in Form von deren Na-Salzen mit einem Molekulargewicht von etwa 1.000 bis 100.000, bevorzugt 1.000 bis 30.000, verwendet.

Als Feuchthaltemittel wird eine Mischung von Na-Lactat (in Form einer insbesondere 50%igen oder 60%igen wässrigen Lösung) und Glyzerin und/oder Propylenglykol in Mengen von vorzugsweise 7 bis 12 % in dem erfindungsgemässen Farbstoffpräparat verwendet.

Ueberraschenderweise konnte weiter festgestellt werden, dass je nach Verhältnis von Na-Lactat zu Glyzerin und/oder Propylenglykol die Viskosität der Farbstoffpräparation regulierbar ist.

Gegebenenfalls kann die erfindungsgemässe Farbstoffpräparation eine Verbindung mit den monomeren Einheiten der allgemeinen Formel (3) enthalten. Diese Verbindungen sind ebenfalls bekannt. Bevorzugt wird Na-Polystyrolsulfonat mit einem Molekulargewicht (MG) von ca. 500.000 zur Regulierung der Viskosität der Farbstoffpräparation und zum Erreichen eines minimalen Sedimentes nach einer längeren Zeit der Lagerung, verwendet. Das Sediment weist allgemein eine weiche, gut homogenisierbare und gut redispergierbare Form auf.

Weitere Komponenten der erfindungsgemässen Dispersionsfarbstoff-Präparate sind Betain-Monohydrat zur Förderung der Redispergierbarkeit und übliche Hilfsmittel wie beispielsweise Antischaummittel z.B. 2,4,7,9-Tetramethyl-5-decyn-4,7-diol; Polypropylenglykol MG 10.000, N.N-Dimethyloleylamid und Konservierungsmittel z.B. Chloracetamid, Hydroxymethylchloracetamid.

Als Farbstoffe in den erfindungsgemässen Farbstoffpräparaten werden vorallem Dispersionsfarbstoffe verwendet, die bei einer Temperatur von 20°C eine Wasserlöslichkeit von weniger als 1 g/l aufweisen und chemisch den verschiedensten Klassen angehören. Beispielsweise handelt es sich um carbon- und sulfonsäuregruppenfreie Nitro-, Aminoketon-, Ketonimin-, Methin-, Polymethin-, Diphenylamin-, Chinolin-, Benzimidazol-, Xanthen-, Oxazin- oder Cumarinfarbstoffe und insbesondere um Anthrachinon- und Azofarbstoffe, wie Mono- oder Disazofarbstoffe. Geeignete Dispersionsfarbstoffe sind z.B. im Colour Index unter "Disperse dyes" aufgeführt

Bevorzugt sind wässrige Farbstoffpräparate, die
15-40 Gew.% Dispersionsfarbstoff
3-18 Gew.% anionischen Dispergator der allgemeinen Formel 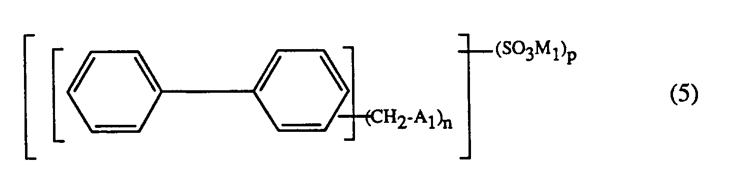
worin
- A₁: der Rest eines aromatischen Kohlenwasserstoffes, welcher mittels eines Ringkohlenstoffatoms an die Methylengruppe gebunden ist und keine Hydroxy- oder Aminosubstituenten aufweist
n und p unabhängig voneinander je eine Zahl von 1 bis 4 und
M₁ Na, K, Li oder Triethanolamin
bedeuten,
1-10 Gew.% Na-Lactat
1-10 Gew.% Glyzerin und/oder Propylenglykol,
0,1-5 Gew.% Na-Polyacrylat, Na-Polymethacrylat, Na-Polymaleinat, deren Gemische oder deren Copolymerisate mit einem MG zwischen 1.000 und 100.000,
3-10 Gew.% Betain-Monohydrat,
0- 4 Gew.% einer Verbindung mit den monomeren Einheiten der allgemeinen Formel 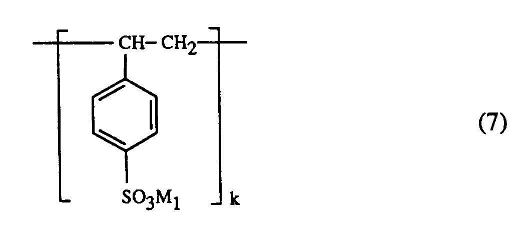
worin
M₁ Na, K, Li, Triethanolamin und k eine Zahl von 50 bis 3000 bedeuten, und
0,1-15 Gew.% übliche Hilfsmittel enthalten.

Besonders bevorzugt sind wässrige Farbstoffpräparate die
18-32 Gew.% Dispersionsfarbstoff,
5-12 Gew.% anionischen Dispergator der allgemeinen Formel 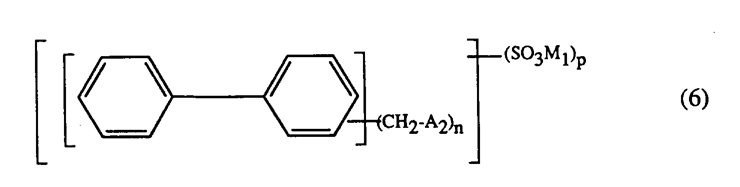
worin
- A₂: ein Naphthalinrest, welcher mittels eines Ringkohlenstoffatoms an die Methylengruppe gebunden ist und keine Hydroxy- oder Aminosubstituenten aufweist
n und p unabhängig voneinander je eine Zahl von 1 bis 4,
M₁ Na, K, Li oder Triethanolamin
bedeuten,
7-12 Gew.% einer Mischung aus Na-Lactat und Glyzerin und/oder 1,2-Propylenglykol,
1- 3 Gew.% Na-Polyacrylat mit einem MG zwischen 1.000 und 30.000,
5- 9 Gew.% Betain-Monohydrat,
0- 1 Gew.% Na-Polystyrolsulfonat mit einem MG zwischen 400.000 und 600.000 und
0,1-5 Gew.% übliche Hilfsmittel enthalten.

Die erfindungsgemässen Dispersionsfarbstoff-Präparate können in kontinuierlichen Färbeverfahren, wie z.B. Pad-Thermosol für PES-Fasern oder in allen 1- und 2-badigen Färbeverfahren für PES/Cel-Fasern, wie z.B. Pad-Thermosol-Pad Batch- oder Thermosol-Thermofixier-Verfahren mit und ohne Alkali (NaHCO₃)-Zusatz mit Reaktivfarbstoffen und in Pad-Thermosol-Pad-Steam-Verfahren mit Küpen- oder Reaktivfarbstoffen, verwendet werden.

Die erfindungsgemässen Dispersionsfarbstoff-Präparate können auch in verschiedenen Druckverfahren für PES- und PES/Cel-Fasern mit natürlichen Verdickern verwendet werden, sowie in Hochtemperatur-Ausziehverfahren für PES- oder PES/Cel-Fasern gemeinsam mit geeigneten Farbstoffen für Cellulose-Fasern unter Zusatz von 1-3 g/l anionischen Dispergatoren, wie z.B. Ligninsulfonaten, oder Kondensationsprodukten aus Phenolen, Naphtholsulfonsäuren, Natriumsulfit und Formaldehyd und andere.

Die erfindungsgemässen Dispersionsfarbstoff-Präparate werden beispielsweise erhalten, indem man den Dispersionsfarbstoff oder eine Mischung von Dispersionsfarbstoffen in eine wässrige Lösung des anionischen Dispergators gibt und das Gemisch bei Raumtemperatur während 20 bis 30 Minuten homogenisiert. Danach werden die weiteren erfindungsgemässen Komponenten zugesetzt und die Dispersion nass gemahlen. Diese weiteren Komponenten können auch vor, während oder nach dem Nassmahlungsprozess zugegeben werden.

Zur Nassmahlung kann man die üblichen Kolloidmühlen, Schwing- und Kugelmühlen, Stiftmühlen, Vibromühlen, Dissolver und Sub-Mikron-Disperser als Hochleistungsdispergiergeräte verwenden. Vorzugsweise werden jedoch Mikrosolmühlen oder kontinuierliche Rührwerkmühlen mit Mahlkörpern, vorzugsweise solche aus SiO₂ von 0,2-5 mm Durchmesser, sogenannte Glasperlenmühlen oder Sandmühlen. verwendet. Die Dispersion wird so weit gemahlen, bis die Korngrösse der Farbstoffteilchen Kleiner als 10 », insbesonder Kleiner als 2 » ist. Anschliessend wird die Dispersion vom Mahlhilfsmittel abgetrennt.

In einer weiteren Ausführungsform können die Dispersionsfarbstoff-Präparate auch weitere Farbstoffe wie z.B. Reaktivfarbstoffe enthalten. Bevorzugte Reaktivfarbstoffe sind solche, die als reaktive Gruppe eine Halogen-triazinyl-Gruppe aufweisen, beispielsweise Chlortriazinylfarbstoffe. Vorgenannte Farbstoffe werden vorzugsweise in einer salzarmen Form eingesetzt, die auf ähnliche Weise wie für den Dispergator beschrieben, durch Umkehrosmose erhältlich ist.

Der Gesamtfarbstoffanteil der Präparate beträgt etwa 15-40 Gew.%. Die Herstellung erfolgt analog dem beschriebenen Verfahren zur Herstellung von Dispersionsfarbstoff-Präparaten, wobei es auch möglich ist, den z.B. Reaktivfarbstoff am Ende zu der fertigen Dispersion zuzugeben.

Die Präparate enthaltend eine Mischung von Dispersions- und z.B. Reaktivfarbstoff sind lagerstabil und weisen ähnlich gute Eigenschaften wie die weiter oben beschriebenen nur Dispersionsfarbstoff enthaltenden Präparate auf.

Die folgenden Beispiele veranschaulichen die Erfindung ohne sie darauf zu limitieren. Temperaturen sind in Grad Celsius angegeben, Teile und Prozente bedeuten Gewichtsteile bzw. Gewichtprozente. Die einzelnen Tests wie Migrationstest, Lagerstabilitätstest und Redispergierbarkeitstest sind in der DE-A-28 16 539 beschrieben.

Beispiel 1: 26 Teile des Dispersionsfarbstoffes der Formel 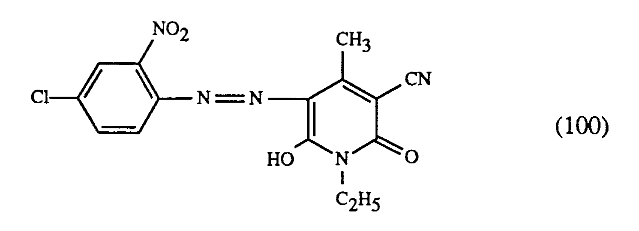
werden als trockener Rohfarbstoff langsam unter intensivem Rühren in eine Lösung enthaltend:
47,2 Teile Wasser
8 Teile Biphenylmethyl-Naphthalin-Sulfonsäure-Kondensationsprodukt, Natriumsalz (0,5 % Na₂SO₄ im trockenen Dispergator),
0,3 Teile Hydroxymethylchloracetamid,
5 Teile Na-Lactat (60 %ige wässr. Lösung),
5 Teile Glyzerin,
7 Teile Betain-Monohydrat und
1,5 Teile Na-Polyacrylat (MG 15.000),
eingetragen und ca. 20 Minuten bei Raumtemperatur (RT; +15 bis +25°C) homogenisiert. Die erhaltene Farbstoffsuspension wird dann in einer offenen Mühle mittels 200 Teilen Siliquarzitkugeln (⌀ 2 mm) während 20 Stunden gemahlen, bis die durchschnittliche Teilchengrösse des Farbstoffes ca. 1 » ist.

Nach der Abtrennung der Mahlkugeln erhält man ein flüssiges Farbstoffpräparat, das eine sehr gute Lagerstabilität über 2 Monate bei -10°C, RT, +40°C und +50°C aufweist. Es wird praktisch keine Sedimentation und Phasentrennung beobachtet.

Bei der Verwendung dieses Farbstoffpräparates zum Foulardieren eines PES/Cel 67:33-Gewebes in einer Konzentration von 25 g/l Foulardflotte unter Zusatz von 10 g/l eines Migrationsinhibitors auf Basis von Polyacrylamid erhält man eine egale gelbe Färbung.

Verwendet man dieses Farbstoffpräparat zusammen mit Reaktivfarbstoffen in einem Einbad-Thermosol-Thermofixierverfähren mit Zusatz von 10 g/l NaHCO₃ und 10 g/l des Migrationsinhibitors auf PES/Cel 67:33-Gewebe, resultiert nach dem Auswaschen der Färbung eine egale brillante Färbung ohne Anschmutzung des PES-Gewebes durch den Reaktivfarbstoff bzw. des Cel-Gewebes durch den Dispersionsfarbstoff, mit guten Farbausbeuten der Dispersions- und Reaktivfarbstoffe.

Beispiel 2: 24,1 Teile des Dispersionsfarbstoffes, C.I. Disperse Orange 45, werden als trockener Rohfarbstoff unter intensivem Rühren in eine Lösung enthaltend:
48,2 Teile Wasser
8 Teile Biphenylmethyl-Naphthalin-Sulfonsäure-Kondensationsprodukt, Natriumsalz (0,5 % Na₂SO₄ im trockenen Dispergator),
0,3 Teile Hydroxymethylchloracetamid,
5 Teile Na-Lactat (60 %ige wässr. Lösung),
7 Teile Betain-Monohydrat,
5 Teile Glyzerin und
2,4 Teile Na-Polyacrylat (MG 2500),
eingetragen und ca. 20 Minuten bei Raumtemperatur homogenisiert. Diese Farbstoffsuspension wird dann in einer offenen Mühle mittels 200 Teilen Siliquarzitkugeln (⌀ 2 mm) während 4 Stunden gemahlen, bis die durchschnittliche Farbstoffteilchengrösse ca. 1 » ist.

Nach der Abtrennung der Mahlkugeln erhält man ein flüssiges Farbstoffpräparat, das eine gute Lagerstabilität über 2 Monate bei +50°C, +40°C, RT und -10°C aufweist. Es wird praktisch keine Sedimentation und Phasentrennung beobachtet; das Präparat ist sehr gut redispergierbar.

Beispiel 3: Geht man analog Beispiel 2 vor, verwendet jedoch anstelle von 5 Teilen Glyzerin 5 Teile Na-Lactat (60 Gew.%ige Lösung) und 1 Teil Glyzerin, so weist das Farbstoffpräparat eine höhere Viskosität und eine vergleichbar gute Lagerstabilität auf.

Beispiel 4: 53,8 Teile feuchter Presskuchen (entsprechend 20,6 Teile Rohfarbstoff trocken und 33,2 Teile Wasser) des Dispersionsfarbstoffes der Formel 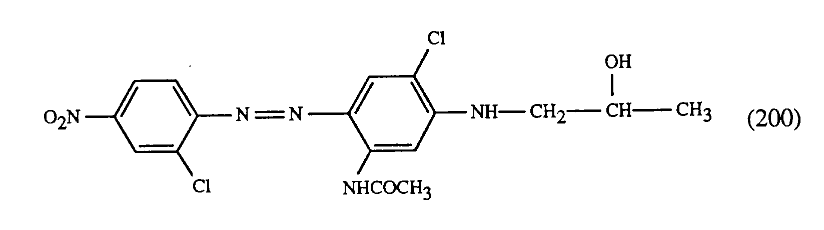
werden unter intensivem Rühren in eine Lösung enthaltend:
16,6 Teile Wasser
10 Teile Biphenylmethyl-Naphthalin-Sulfonsäure-Kondensationprodukt, Natriumsalz, in gleicher Qualität wie in Beispiel 1,
0,3 Teile Hydroxymethylchloracetamid,
7 Teile Na-Lactat (60 %ige wässr. Lösung),
3 Teile Glyzerin,
7 Teile Betain-Monohydrat,
2 Teile Na-Polyacrylat (MG 15.000) und
0,3 Teile Na-Polystyrolsulfonat (MG ca. 500.000)
eingetragen und ca. 20 Minuten bei Raumtemperatur homogenisiert. Diese Farbstoffsuspension wird sodann in einer offenen Mühle mittels 200 Teilen Siliquarzitkugeln (⌀ 2 mm) während 7 Stunden gemahlen, bis die durchschnittliche Farbstoffteilchengrösse ca. 1 » ist.

Nach der Abtrennung der Mahlkugeln erhält man ein flüssiges Farbstoffpräparat, das eine gute Lagerstabilität über 1 Monat bei +50°C, +40°C, RT und -10°C aufweist. Es wird praktisch keine Sedimentation und Phasentrennung beobachtet.

Wird dieses Farbstoffpräparat unter gleichen Bedingungen wie Präparat in Beispiel 1 verwendet, weist es eine niedrige Migration und zusammen mit Reaktivfarbstoffen eine egale rote Färbung ohne Anschmutzung des PES-Gewebes durch den Reaktivfarbstoff bzw. des Cel-Gewebes durch den Dispersionsfarbstoff mit einer guten Farbausbeute beider Farbstoffe auf.

Beispiel 5: 44,5 Teile feuchter Presskuchen (entsprechend 27,5 Teile Rohfarbstoff trocken und 17,0 Teile Wasser) des Dispersionsfarbstoffes, C.I. Disperse Yellow 88, werden unter intensivem Rühren in eine Lösung enthaltend:
29,2 Teile. Wasser
8 Teile Biphenylmethy-Naphthalin-Sulfonsäure-Kondensationprodukt, Natriumsalz, in gleicher Qualität wie in Beispiel 1,
0,3 Teile Hydroxymethylchloracetamid,
4 Teile Glyzerin,
5 Teile Natrium-Lactat (60 %ige wässr. Lösung),
7 Teile Betain-Monohydrat und
2 Teile Na-Polyacrylat (MG 15.000)
eingetragen und ca. 20 Minuten bei Raumtemperatur homogenisiert. Die Farbstoffsuspension wird sodann in einer offenen Mühle mittels 200 Teilen Siliquarzitkugeln (⌀ 2 mm) während 5 Stunden gemahlen, bis die durchschnittliche Farbstoffteilchengrösse ca. 1 » ist.

Nach der Abtrennung der Mahlkugeln erhält man ein flüssiges Farbstoffpräparat, das eine gute Lagerstabilität über 2 Monate bei +50°C, +40°C, RT und -10°C aufweist. Es wird praktisch keine Sedimentation und Phasentrennung beobachtet.

Verwendet man dieses Farbstoffpräparat zusammen mit Reaktivfarbstoffen wie in Beispiel 1, erhält man eine egale Färbung ohne Anschmutzung des PES-Gewebes durch den Reaktivfarbstoff bzw. des Cel-Gewebes durch den Dispersionsfarbstoff mit guten Farbausbeuten der Dispersions- und Reaktivfarbstoffe.

Beispiel 6: Geht man analog Beispiel 5 vor, verwendet jedoch anstelle von 5 Teilen Na-Lactat (60 %ige Lösung) nur 2 Teile Na-Lactat (60 %ige Lösung) und insgesamt 7 Teile Glyzerin, weist das Präparat ebenfalls eine gute Lagerbeständigkeit bis zu 2 Monaten bei RT auf.

Beispiel 7: 43,4 Teile feuchter Presskuchen (entsprechend 22 Teile Rohfarbstoff trocken und 21,4 Teile Wasser) des Dispersionsfarbstoffes, C.J. Disperse Red 82, werden unter intensivem Rühren in eine Lösung enthaltend:
18,8 Teile Wasser
8,5 Teile Biphenyl-Naphthalin-Sulfonsäure-Kondensationsprodukt, Natriumsalz, in gleicher Qualität wie in Beispiel 1,
0,3 Teile Hydroxymethylchloracetamid,
6,0 Teile Glyzerin,
4,0 Teile Natrium-Lactat (60%ige wässrige Lösung),
7,0 Teile Betain-Monohydrat,
12,0 Teile Na-Polyacrylat (MG 2.500) (45%ige wässrige Lösung)
eingetragen und ca. 20 Minuten bei Raumtemperatur homogenisiert. Diese Farbstoffsuspension wird sodann in einer offenen Mühle mittels 200 Teilen Siliquarzitkugeln (⌀ 2 mm) während 15 Stunden gemahlen, bis die durchschnittliche Farbstoffteilchengrösse ca. 1» ist.

Nach der Abtrennung der Mahlkugeln erhält man ein flüssiges Farbstoffpräparat, das eine gute Lagerstabilität über 1 Monat bei +50°C, +40°C und -10°C und eine minimale Sedimentation aufweist.

Wird dann dieses Farbstoffpräparat unter gleichen Bedingungen wie Präparat in Beispiel 1 verwendet, weist es eine niedrige Migration und eine gute Farbausbeute auf dem Polyester-Material auf.

Beispiel 8: 44,3 Teile feuchter Presskuchen (entsprechend 22 Teile Rohfarbstoff trocken und 22,3 Teile Wasser) des Dispersionsfarbstoffes der Formel 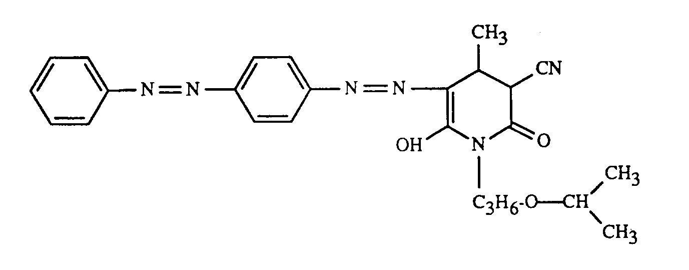
werden unter intensivem Rühren in eine Lösung enthaltend:
23,9 Teile Wasser
8,5 Teile Biphenyl-Naphthalin-Sulfonsäure-Kondensationsprodukt, Natriumsalz, in gleicher Qualität wie in Beispiel 1,
0,3 Teile Hydroxymethylchloracetamid,
5,0 Teile Glyzerin,
5,0 Teilen Natrium-Lactat (60%ige wässrige Lösung),
7,0 Teile Betain-Monohydrat,
6,0 Teile Na-Polyacrylat (MG 2.500) (45%ige wässrige Lösung)
eingetragen und ca. 20 Minuten bei Raumtemperatur homogenisiert. Diese Farbstoffsuspension wird sodann in einer offenen Mühle mittels 200 Teilen Siliquarzitkugeln (⌀ 2 mm) während 15 Stunden gemahlen, bis die durchschnittliche Farbstoffteilchengrösse ca. 1» ist.

Nach der Abtrennung der Mahlkugeln erhält man ein flüssiges Farbstoffpräparat, das eine gute Lagerstabilität über 1 Monat bei +50°C, +40°C und -10°C aufweist.

Wird dieses Farbstoffpräparat unter gleichen Bedingungen wie Präparat in Beispiel 1 verwendet, weist es eine niedrige Migration und eine gute Farbausbeute auf dem Polyester-Material auf.

Beispiel 9: 24,4 Teile des feuchten Presskuchens (enthaltend 22,9 Teile Rohfarbstoff trocken und 1,5 Teile Wasser) des Dispersionsfarbstoffes C.J. Disperse Blue 165, werden unter intensivem Rühren in eine Lösung enthaltend:
48,3 Teile Wasser
8,0 Teile Biphenyl-Naphthalin-Sulfonsäure-Kondensationsproduckt, Natriumsalz, in gleicher Qualität wie in Beispiel 1,
0,3 Teile Hydroxymethylchloracetamid,
4,0 Teile Glyzerin,
6,0 Teile Natrium-Lactat (60%ige wässrige Lösung),
7,0 Teile Betain-Monohydrat,
2,0 Teile Na-Polyacrylat-Pulver (MG 15.000)
eingetragen und ca. 20 Minuten bei Raumtemperatur homogenisiert. Diese Farbstoffsuspension wird dann gleich nassgemahlen und isoliert wie in Beispiel 8.

Man erhält ein flüssiges Farbstoffpräparat, das eine gute Lagerstabilität während 2 Monaten bei +50°C, +40°C und -10°C und minimale Sedimentation aufweist.

Bei der Applikation wie im Beispiel 4 wird mit diesem Farbstoffpräparat eine gute Verträglichkeit mit Reaktivfarbstoffen und gute Polyester-Farbausbeute erzielt.

Beispiel 10: 31,6 Teile feuchter Presskuchen (entsprechend 22,7 Teile Rohfarbstoff trocken und 8,9 Teile Wasser) des Dispersionsfarbstoffes C.J. Disperse Blue 130, werden unter intensivem Rühren in eine Lösung enthaltend:
31,6 Teile Wasser
12,5 Teile Biphenyl-Naphthalin-Sulfonsäure-Kondensationsprodukt, Natriumsalz, in gleicher Qualität wie in Beispiel 1,
0,3 Teile Hydroxymethylchloracetamid,
1,0 Teile Glyzerin,
8,0 Teile Natrium-Lactat (60%ige wässrige Lösung),
7,0 Teile Betain-Monohydrat,
8,0 Teile Na-Polyacrylat (MG 2.500) (45%ige wässrige Lösung)
eingetragen und ca. 20 Minuten bei Raumtemperatur homogenisiert. Diese Farbstoffsuspension wird dann gleich nassgemahlen und isoliert wie in Beispiel 8.

Man erhält ein flüssiges Farbstoffpräparat, das eine gute Lagerstabilität über 1 Monat bei +50°C, +40°C und -10°C, eine gute Redispergierbarkeit und minimale Sedimentation aufweist.

Beispiel 11: Geht man analog Beispiel 10 vor, verwendet jedoch anstelle von 12,5 Teilen Biphenyl-Naphthalinsulfonsäure-Kondensationsprodukt, Na-Salz 12,5 Teile Di-Tolyläthersulfonsäure-Formaldehyd-Kondensationsprodukt, Na-Salz, in einer salzarmen Form (0,8 % Na₂SO₄ im trockenen Dispergator), so weist das Farbstoffpräparat die gleich guten Lagerstabilitäten und eine gute Redispergierbarkeit auf wie Präparat nach Beispiel 10.

Beispiel 12: 20,7 Teile des Dispersionsfarbstoffes C.J. Disperse Blue 333, werden als trockener Rohfarbstoff unter intensivem Rühren in eine Lösung enthaltend:
44,0 Teile Wasser
10,0 Teile Biphenyl-Naphthalin-Sulfonsäure-Kondensationsprodukt, Natriumsalz, in gleicher Qualität wie in Beispiel 1,
0,3 Teile Hydroxymethylchloracetamid,
4,0 Teile Glyzerin,
6,0 Teile Natrium-Lactat (60%ige wässrige Lösung),
8,0 Teile Betain-Monohydrat,
7,0 Teile Na-Polyacrylat (MG 2.500) (45%ige wässrige Lösung)
eingetragen und ca. 20 Minuten bei Raumtemperatur homogenisiert. Diese Farbstoffsuspension wird dann gleich nassgemahlen und isoliert wie in Beispiel 8.

Man erhält ein flüssiges Farbstoffpräparat, das eine gute Lagefstabilität über 1 Monat bei +50°C, +40°C und -10°C und minimale Sedimentation aufweist.

Beispiel 13:
59,3 Teile des Farbstoffpräpazates nach Beispiel 10 werden mit
36,3 Teilen des Farbstoffpräparates nach Beispiel 11
2,0 Teilen Betain-Monohydrat und
2,4 Teilen Na-Polyacrylat (MG 2.500) (45%ige wässrige Lösung)
zusammengemischt und unter Rühren 2 Stunden homogenisiert. Man erhält ein flüssiges Farbstoffpräparat, das eine gute Lagerstabilität über 1 Monat bei +50°C, +40°C und -10°C, eine gute Redispergierbarkeit und minimale Sedimentation aufweist.

Wird dieses Farbstoffpräparat unter gleichen Bedingungen wie Präparat in Beispiel 1 verwendet, weist es eine niedrige Migration und eine gute Farbausbeute auf dem Polyester-Material auf.

Beispiel 14:
64,0 Teile des Farbstoffpräparates nach Beispiel 9 werden mit
29,1 Teilen des Farbstoffpräparates nach Beispiel 11
4,0 Teilen Glyzerin und
2,9 Teilen Na-Polyacrylat (MG 2.500) (45%ige wässrige Lösung)
zusammengemischt und unter Rühren 2 Stunden homogenisiert. Man erhält ein flüssiges Farbstoffpräparat, das eine gute Lagerstabilität über 1 Monat bei +50°C, +40°C und -10°C, eine gute Redispergierbarkeit und minimale Sedimentation aufweist.

Wird dieses Farbstoffpräparat unter gleichen Bedingungen wie Präparat in Beispiel 1 verwendet, weist es eine niedrige Migration und eine gute Farbausbeute auf dem Polyester-Material auf.

## Patentansprüche (Patentansprüche für folgende(n) Vertragsstaat(en): AT, CH, DE, FR, GB, IT, LI)

1. Wässrige Farbstoffpräparate von in Wasser unlöslichen bis schwerlöslichen Farbstoffen, dadurch gekennzeichnet, dass sie
15-40 Gew.% Farbstoff,
3-18 Gew.% anionischen Dispergator der allgemeinen Formel 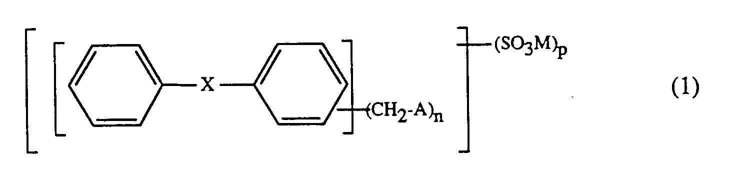 worin
X die direkte Bindung oder Sauerstoff
A Wasserstoff oder den Rest einer aromatischen Verbindung, welcher mittels eines Ringkohlenstoffatoms an die Methylengruppe gebunden ist und keine Hydroxy- oder Aminosubstituenten aufweist
n und p unabhängig voneinander je eine Zahl von 1 bis 4 und
M ein einwertiges Kation
bedeuten, und gegebenenfalls Kondensate dieser Verbindungen mit Formaldehyd
1-10 Gew.% Na-Lactat
1-10 Gew.% Glyzerin und/oder Propylenglykol
0,1-5,0 Gew.% einer Verbindung mit den monomeren Einheiten der allgemeinen Formel 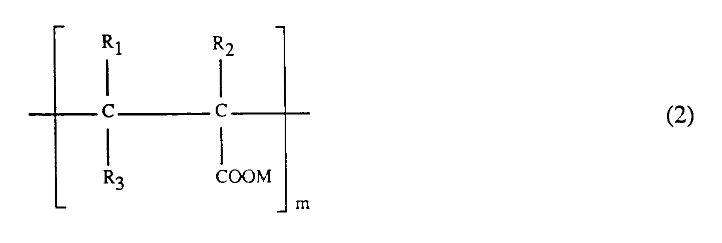 worin
R₁ H, C₁-C₃-Alkyl, COOM
R₂ H, C₁-C₃-Alkyl,
R₃ H, C₁-C₃-Alkyl, CH₂COOM
M ein einwertiges Kation und
m eine Zahl von 8-1000
bedeuten,
3-10 Gew.% Betain-Monohydrat,
0- 4 Gew.% einer Verbindung mit den monomeren Einheiten der allgemeinen Formel 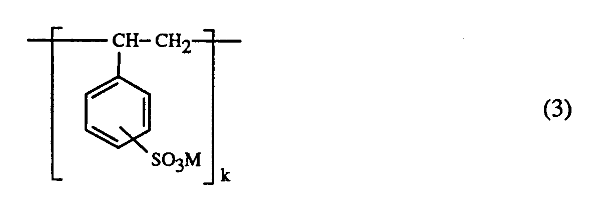 worin
M ein einwertiges Kation und
k eine Zahl von 50 bis 3000
bedeuten, und
0,1-15 Gew.% übliche Hilfsmittel enthalten.

2. Wässrige Farbstoffpräparate gemäss Anspruch 1, dadurch gekennzeichnet, dass sie
15-40 Gew.% Dispersionsfarbstoff,
3-18 Gew.% anionischen Dispergator der allgemeinen Formel 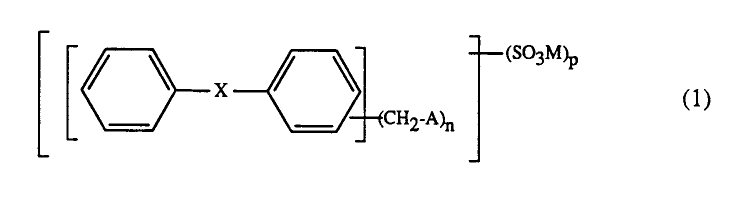 worin
X die direkte Bindung oder Sauerstoff
A den Rest einer aromatischen Verbindung, welcher mittels eines Ringkohlenstoffatoms an die Methylengruppe gebunden ist und keine Hydroxy- oder Aminosubstituenten aufweist
n und p unabhängig voneinander je eine Zahl von 1 bis 4 und
M ein einwertiges Kation
bedeuten,
1-10 Gew.% Na-Lactat
1-10 Gew.% Glyzerin und/oder Propylenglykol
0,1-5,0 Gew.% einer Verbindung mit den monomeren Einheiten der allgemeinen Formel 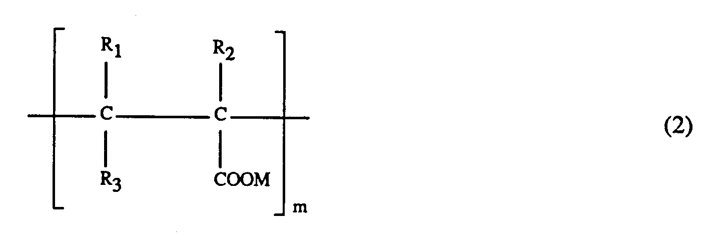 worin
R₁ H, C₁-C₃-Alkyl, COOM
R₂ H, C₁-C₃-Alkyl,
R₃ H, C₁-C₃-Alkyl, CH₂COOM
M ein einwertiges Kation und
meine Zahl von 8-1000
bedeuten,
3-10 Gew.% Betain-Monohydrat,
0- 4 Gew.% einer Verbindung mit den monomeren Einheiten der allgemeinen Formel 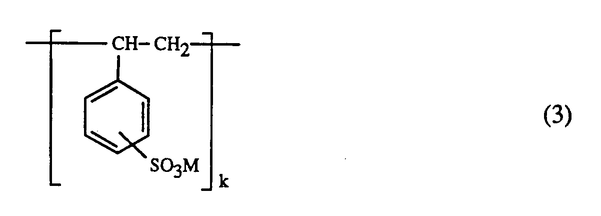 worin
M ein einwertiges Kation und
k eine Zahl von 50 bis 3000
bedeuten, und
0,1-15 Gew.% übliche Hilfsmittel enthalten.

3. Wässrige Farbstoffpräparate gemäss Anspruch 2, dadurch gekennzeichnet, dass der anionische Dispergator der allgemeinen Formel 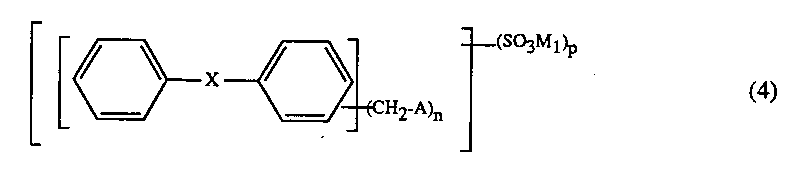 entspricht, worin
X die direkte Bindung oder Sauerstoff,
A der Rest einer aromatischen Verbindung, welcher mittels eines Ringkohlenstoffatoms an die Methylengruppe gebunden ist und keine Hydroxy- oder Aminosubstituenten aufweist,
n und p unabhängig voneinander je eine Zahl von 1 bis 4 und
M₁ Na, K, Li oder Triethanolamin
bedeutet.

4. Wässrige Farbstoffpräparate gemäss Anspruch 3, dadurch gekennzeichnet, dass der anionische Dispergator der allgemeinen Formel 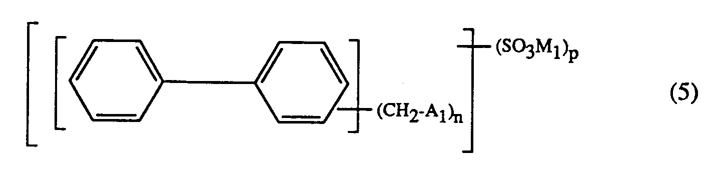 entspricht, worin
A₁ der Rest eines aromatischen Kohlenwasserstoffes, welcher mittels eines Ringkohlenstoffatoms an die Methylengruppe gebunden ist und keine Hydroxy- oder Aminosubstituenten aufweist,
n und p unabhängig voneinander je eine Zahl von 1 bis 4 und
M₁ Na, K, Li oder Triethanolamin
bedeuten.

5. Wässrige Farbstoffpräparate gemäss Anspruch 4, dadurch gekennzeichnet, dass der anionische Dispergator der allgemeinen Formel 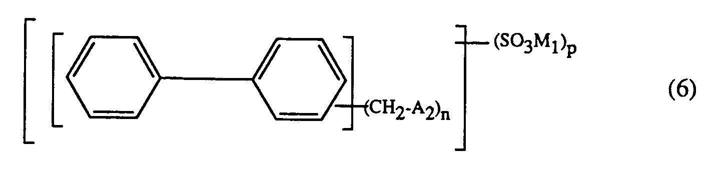 entspricht, worin
A₂ ein Naphthalinrest, welcher mittels eines Ringkohlenstoffatoms an die Methylengruppe gebunden ist und keine Hydroxy- oder Aminosubstituenten aufweist,
n und p unabhängig voneinander je eine Zahl von 1 bis 4 und
M₁ Na, K, Li oder Triethanolamin
bedeuten.

6. Wässrige Farbstoffpräparate gemäss Anspruch 1 oder 2, dadurch gekennzeichnet, dass der anionische Dispergator der Formel (1) ein Verhältnis von Kohlenstoff zu organisch gebundenem Schwefel von >15:1 aufweist und die Elektrolytmenge im trockenen Dispergator, als Na₂SO₄ ausgedrückt, unter 1 Gew.% beträgt.

7. Wässrige Farbstoffpräparate gemäss Anspruch 1 oder 2, dadurch gekennzeichnet, dass die Verbindung der allgemeinen Formel (2) Na-Polyacrylat, Na-Polymethacrylat, Na-Polymaleinat, deren Gemische oder deren Copolymerisate mit einem Molgewicht zwischen 1.000 und 100.000 sind.

8. Wässrige Farbstoffpräparate gemäss Anspruch 7, dadurch gekennzeichnet, dass die Verbindung der allgemeinen Formel (2) Na-Polyacrylat, Na-Polymethacrylat, Na-Polymaleinat, deren Gemische oder deren Copolymerisate mit einem Molgewicht zwischen 1.000 und 30.000 sind.

9. Wässrige Farbstoffpräparate gemäss Anspruch 1 oder 2, dadurch gekennzeichnet, dass die Summe der Mischung aus Na-Lactat und Glyzerin und/oder Propylenglykol 7-12 Gew.% des Farbstoffpräparates ausmacht.

10. Wässrige Farbstoffpräparate gemäss Anspruch 1 oder 2, dadurch gekennzeichnet, dass die Verbindungen der allgemeinen Formel (3) ein Molgewicht zwischen 400.000 und 600.000, als Natriumsalze gerechnet, aufweisen.

11. Wässrige Farbstoffpräparate gemäss Anspruch 1 oder 2, dadurch gekennzeichnet, dass sie
15-40 Gew.% Dispersionsfarbstoff,
3-18 Gew.% anionischen Dispergator der allgemeinen Formel 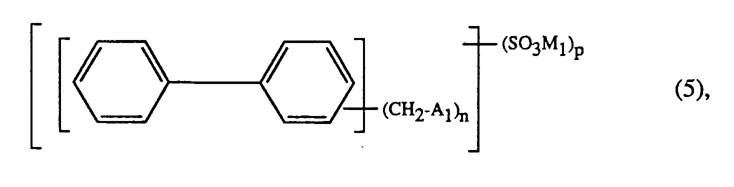 worin
A₁ der Rest eines aromatischen Kohlenwasserstoffes, welcher mittels eines Ringkohlenstoffatoms an die Methylengruppe gebunden ist und keine Hydroxy- oder Aminosubstituenten aufweist,
n und p unabhängig voneinander je eine Zahl von 1 bis 4 und
M₁ Na, K, Li oder Triethanolamin
bedeuten,
1-10 Gew.% Na-Lactat,
1-10 Gew.% Glyzerin und/oder Propylenglykol,
0,1-5 Gew.% Na-Polyacrylat, Na-Polymethacrylat, Na-Polymaleinat, deren Gemische oder deren Copolymerisate mit einem MG zwischen 1.000 und 100.000,
3-10 Gew.% Betain-Monohydrat,
0- 4 Gew.% einer Verbindung mit den monomeren Einheiten der allgemeinen Formel 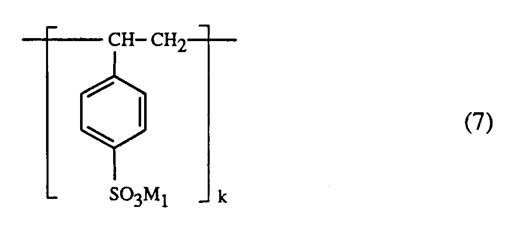 worin
M₁ Na, K, Li, Triethanolamin und k eine Zahl von 50 bis 3000 bedeuten, und
0,1-15 Gew.% übliche Hilfsmittel enthalten.

12. Wässrige Farbstoffpräparate gemäss Anspruch 11, dadurch gekennzeichnet, dass sie
18-32 Gew.% Dispersionsfarbstoff,
5-12 Gew.% anionischen Dispergator der allgemeinen Formel 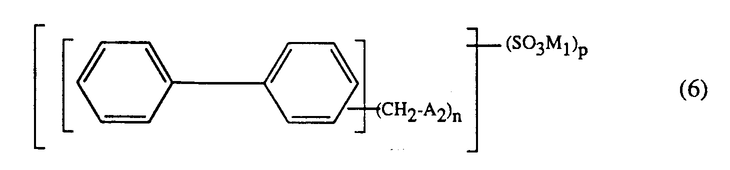 worin
A₂ ein Naphthalinrest, welcher mittels eines Ringkohlenstoffatoms an die Methylengruppe gebunden ist und keine Hydroxy- oder Aminosubstituenten aufweist
n und p unabhängig voneinander je eine Zahl von 1 bis 4,
M₁ Na, K, Li oder Triethanolamin
bedeuten.
7-12 Gew.% einer Mischung aus Na-Lactat und Glyzerin und/oder 1,2-Propylenglykol,
1- 3 Gew.% Na-Polyacrylat mit einem MG zwischen 1.000 und 30.000,
5- 9 Gew.% Betain-Monohydrat,
0- 1 Gew.% Na-Polystyrolsulfonat mit einem MG zwischen 400.000 und 600.000 und
0,1-5 Gew.% übliche Hilfsmittel enthalten.

13. Wässrige Farbstoffpräparate gemäss Anspruch 1, dadurch gekennzeichnet, dass die Präparate zusätzlich einen weiteren Farbstoff als einen in Wasser unlöslichen bis schwerlöslichen Farbstoff enthalten.

14. Wässrige Farbstoffpräparate gemäss Anspruch 13, dadurch gekennzeichnet, dass der weitere Farbstoff ein Reaktivfarbstoff ist.

15. Verfahren zur Herstellung der wässrigen Farbstoffpräparate gemäss einem der Ansprüche 1-14, dadurch gekennzeichnet, dass man den in Wasser unlöslichen bis schwerlöslichen Farbstoff in Wasser unter Zusatz des anionischen Dispergators der allgemeinen Formel (1) bis zu einer Teilchengrösse Kleiner als 10 » vermahlt, wobei man die restlichen Komponenten vor, während oder nach dem Mahlprozess zugibt.

16. Verwendung der wässrigen Farbstoffpräparate gemäss einem der Ansprüche 1-14 zur Herstellung von Färbeflotten oder Druckpasten zum Färben oder Bedrucken von synthetischen Textilien oder deren Mischungen mit Naturfasem.

17. Verwendung der wässrigen Farbstoffpräparate gemäss einem der Ansprüche 1-14 zum kontinuierlichen Färben von Polyester-Textilmaterialien oder deren Mischungen mit Cellulose-Textilmaterialien.

18. Das mit den Farbstoffpräparaten gemäss einem der Ansprüche 1-14 gefärbte Textilmaterial.

## Patentansprüche (Patentansprüche für folgende(n) Vertragsstaat(en): ES)

1. Verfahren zur Herstellung von wässrigen Farbstoffpräparaten von in Wasser unlöslichen bis schwerlöslichen Farbstoffen, dadurch gekennzeichnet, dass man
15-40 Gew.% Farbstoff
3-18 Gew.% anionischen Dispergator der allgemeinen Formel 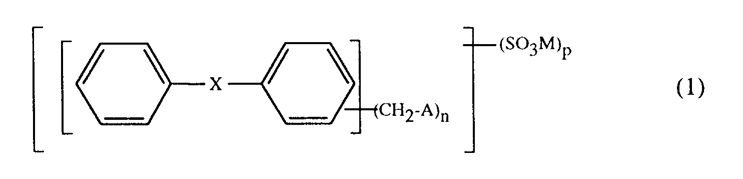 worin
X die direkte Bindung oder Sauerstoff
A Wasserstoff oder den Rest einer aromatischen Verbindung, welcher mittels eines Ringkohlenstoffatoms an die Methylengruppe gebunden ist und keine Hydroxy- oder Aminosubstituenten aufweist
n und p unabhängig voneinander je eine Zahl von 1 bis 4 und
M ein einwertiges Kation
bedeuten, und gegebenenfalls Kondensaten dieser Verbindungen mit Formaldehyd
bis zu einer Teilchengrösse kleiner als 10 » vermahlt, wobei man vor, während oder nach dem Mahlprozess
1-10 Gew.% Na-Lactat
1-10 Gew.% Glyzerin und/oder Propylenglykol
0,1-5,0 Gew.% einer Verbindung mit den monomeren Einheiten der allgemeinen Formel 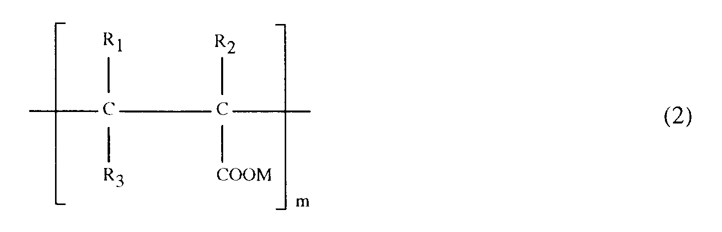 worin
R₁ H, C₁-C₃-Alkyl, COOM
R₂ H, C₁-C₃-Alkyl,
R₃ H, C₁-C₃-Alkyl, CH₂COOM
M ein einwertiges Kation und
m eine Zahl von 8-1000
bedeuten,
3-10 Gew.% Betain-Monohydrat,
0- 4 Gew.% einer Verbindung mit den monomeren Einheiten der allgemeinen Formel 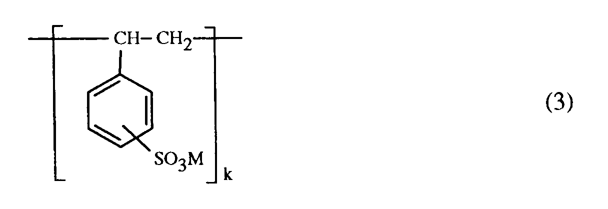 worin
M ein einwertiges Kation und
k eine Zahl von 50 bis 3000
bedeuten, und
0,1-15 Gew.% üblicher Hilfsmittel
zugibt.

2. Verfahren gemäss Anspruch 1, dadurch gekennzeichnet, dass man
15-40 Gew.% Dispersionsfarbstoff,
3-18 Gew.% anionischen Dispergator der allgemeinen Formel 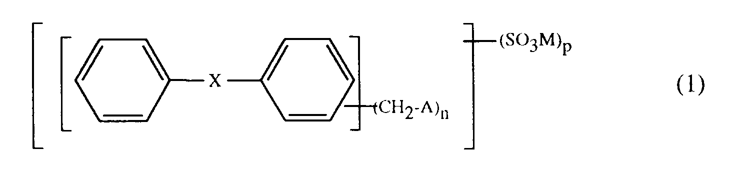 worin
X die direkte Bindung oder Sauerstoff
A den Rest einer aromatischen Verbindung, welcher mittels eines Ringkohlenstoffatoms an die Methylengruppe gebunden ist und keine Hydroxy- oder Aminosubstituenten aufweist
n und p unabhängig voneinander je eine Zahl von 1 bis 4 und
M ein einwertiges Kation
bedeuten,
1-10 Gew.% Na-Lactat
1-10 Gew.% Glyzerin und/oder Propylenglykol
0,1-5,0 Gew.% einer Verbindung mit den monomeren Einheiten der allgemeinen Formel 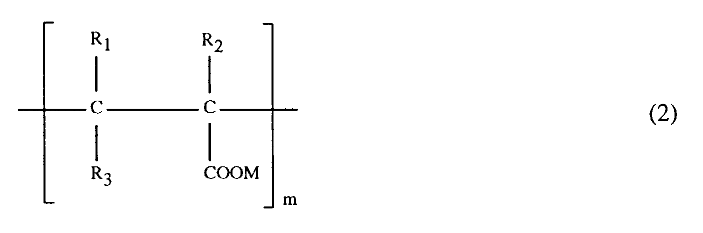 worin
R₁ H, C₁-C₃-Alkyl, COOM
R₂ H, C₁-C₃-Alkyl,
R₃ H, C₁-C₃-Alkyl, CH₂COOM
M ein einwertiges Kation und
m eine Zahl von 8-1000
bedeuten,
3-10 Gew.% Betain-Monohydrat,
0- 4 Gew.% einer Verbindung mit den monomeren Einheiten der allgemeinen Formel 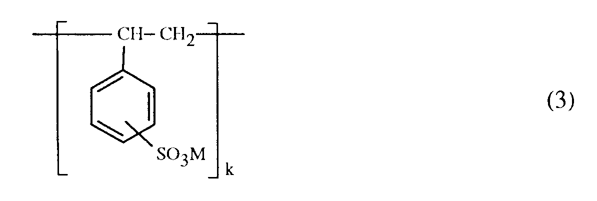 worin
M ein einwertiges Kation und
k eine Zahl von 50 bis 3000
bedeuten, und
0,1-15 Gew.% üblicher Hilfsmittel
verwendet.

3. Verfahren gemäss Anspruch 2, dadurch gekennzeichnet, dass der anionische Dispergator der allgemeinen Formel 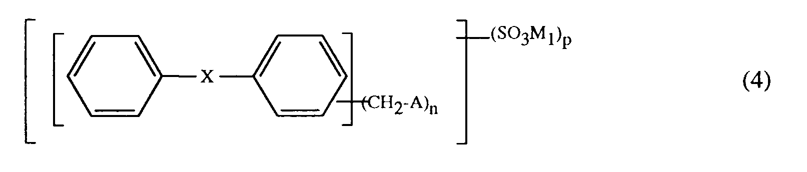 entspricht, worin
X die direkte Bindung oder Sauerstoff,
A der Rest einer aromatischen Verbindung, welcher mittels eines Ringkohlenstoffatoms an die Methylengruppe gebunden ist und keine Hydroxy- oder Aminosubstituenten aufweist,
n und p unabhängig voneinander je eine Zahl von 1 bis 4 und
M₁ Na, K, Li oder Triethanolamin
bedeutet.

4. Verfahren gemäss Anspruch 3, dadurch gekennzeichnet, dass der anionische Dispergator der allgemeinen Formel 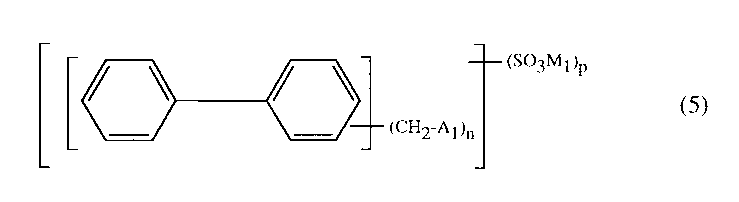 entspricht, worin
A₁ der Rest eines aromatischen Kohlenwasserstoffes, welcher mittels eines Ringkohlenstoffatoms an die Methylengruppe gebunden ist und keine Hydroxy- oder Aminosubstituenten aufweist,
n und p unabhängig voneinander je eine Zahl von 1 bis 4 und
M₁ Na, K, Li oder Triethanolamin
bedeuten.

5. Verfahren gemäss Anspruch 4, dadurch gekennzeichnet, dass der anionische Dispergator der allgemeinen Formel 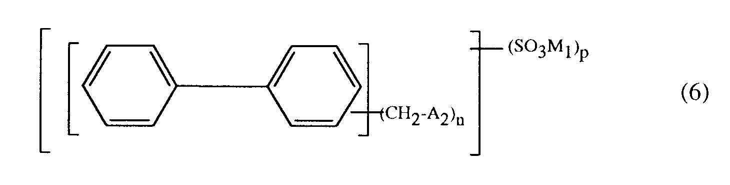 entspricht, worin
A₂ ein Naphthalinrest, welcher mittels eines Ringkohlenstoffatoms an die Methylengruppe gebunden ist und keine Hydroxy- oder Aminosubstituenten aufweist,
n und p unabhängig voneinander je eine Zahl von 1 bis 4 und
M₁ Na, K, Li oder Triethanolamin
bedeuten.

6. Verfahren gemäss Anspruch 1 oder 2, dadurch gekennzeichnet, dass der anionische Dispergator der Formel (1) ein Verhältnis von Kohlenstoff zu organisch gebundenem Schwefel von >15:1 aufweist und die Elektrolytmenge im trockenen Dispergator, als Na₂SO₄ ausgedrückt, unter 1 Gew.% beträgt.

7. Verfahren gemäss Anspruch 1 oder 2, dadurch gekennzeichnet, dass die Verbindung der allgemeinen Formel (2) Na-Polyacrylat, Na-Polymethacrylat, Na-Polymaleinat, deren Gemische oder deren Copolymerisate mit einem Molgewicht zwischen 1.000 und 100.000 sind.

8. Verfahren gemäss Anspruch 7, dadurch gekennzeichnet, dass die Verbindung der allgemeinen Formel (2) Na-Polyacrylat, Na-Polymethacrylat, Na-Polymaleinat, deren Gemische oder deren Copolymerisate mit einem Molgewicht zwischen 1.000 und 30.000 sind.

9. Verfahren gemäss Anspruch 1 oder 2, dadurch gekennzeichnet, dass die Summe der Mischung aus Na-Lactat und Glyzerin und/oder Propylenglykol 7-12 Gew.% des Farbstoffpräparates ausmacht.

10. Verfahren gemäss Anspruch 1 oder 2, dadurch gekennzeichnet, dass die Verbindungen der allgemeinen Formel (3) ein Molgewicht zwischen 400.000 und 600.000, als Natriumsalze gerechnet, aufweisen.

11. Verfahren gemäss Anspruch 1 oder 2, dadurch gekennzeichnet, dass man
15-40 Gew.% Dispersionsfarbstoff,
3-18 Gew.% anionischen Dispergator der allgemeinen Formel 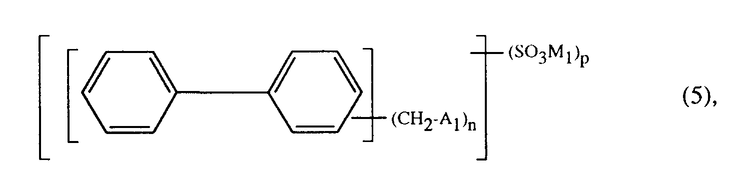 worin
A₁ der Rest eines aromatischen Kohlenwasserstoffes, welcher mittels eines Ringkohlenstoffatoms an die Methylengruppe gebunden ist und keine Hydroxy- oder Aminosubstituenten aufweist,
n und p unabhängig voneinander je eine Zahl von 1 bis 4 und
M₁ Na, K, Li oder Triethanolamin
bedeuten,
1-10 Gew.% Na-Lactat,
1-10 Gew.% Glyzerin und/oder Propylenglykol,
0,1-5 Gew.% Na-Polyacrylat, Na-Polymethacrylat, Na-Polymaleinat, deren Gemische oder deren Copolymerisate mit einem MG zwischen 1.000 und 100.000,
3-10 Gew.% Betain-Monohydrat,
0- 4 Gew.% einer Verbindung mit den monomeren Einheiten der allgemeinen Formel 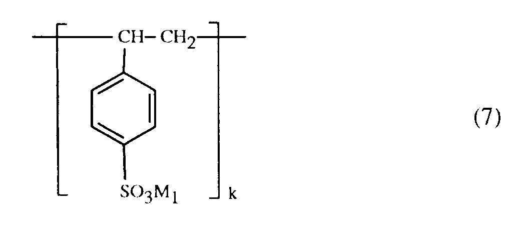 worin
M₁ Na, K, Li, Triethanolamin und k eine Zahl von 50 bis 3000 bedeuten, und
0,1-15 Gew.% üblicher Hilfsmittel venwendet.

12. Verfahren gemäss Anspruch 11, dadurch gekennzeichnet, dass man
18-32 Gew.% Dispersionsfarbstoff,
5-12 Gew.% anionischen Dispergator dei allgemeinen Formel 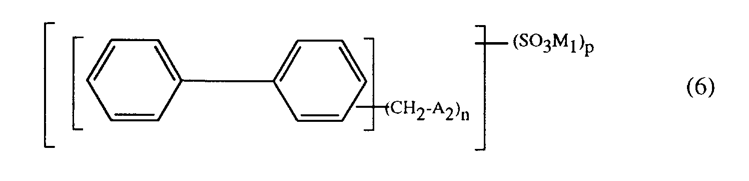 worin
A₂ ein Naphthalinrest, welcher mittels eines Ringkohlenstoffatoms an die Methylengruppe gebunden ist und keine Hydroxy- oder Aminosubstituenten aufweist
n und p unabhängig voneinander je eine Zahl von 1 bis 4,
M₁ Na, K, Li oder Triethanolamin
bedeuten,
7-12 Gew.% einer Mischung aus Na-Lactat und Glyzerin und/oder 1,2-Propylenglykol,
1- 3 Gew.% Na-Polyacrylat mit einem MG zwischen 1.000 und 30.000,
5- 9 Gew.% Betain-Monohydrat,
0- 1 Gew.% Na-Polystyrolsulfonat mit einem MG zwischen 400.000 und 600.000 und
0,1-5 Gew.% üblicher Hilfsmittel verwendet.

13. Verfahren gemäss Anspruch 1, dadurch gekennzeichnet, dass man zusätzlich einen weiteren Farbstoff als einen in Wasser unlöslichen bis schwerlöslichen Farbstoff verwendet.

14. Verfahren gemäss Anspruch 13, dadurch gekennzeichnet, dass der weitere Farbstoff ein Reaktivfarbstoff ist.

15. Verwendung der gemäss der Ansprüche 1-14 hergestellten wässrigen Farbstoffpräparaten zur Herstellung von Färbeflotten oder Druckpasten zum Färben oder Bedrucken von synthetischen Textilien oder deren Mischungen mit Naturfasern.

16. Verwendung der gemäss einem der Ansprüche 1-14 hergestellten wässrigen Farbstoffpräparaten zum kontinuierlichen Färben von Polyester-Textilmaterialien oder deren Mischungen mit Cellulose-Textilmaterialien.

17. Das mit den gemäss einem der Ansprüche 1-14 hergestellten Farbstoffpräparaten gefärbte Textilmaterial.

## Claims (Claims for the following Contracting State(s): AT, CH, DE, FR, GB, IT, LI)

1. An aqueous dye preparation of a dye insoluble to sparingly soluble in water, which contains
15-40% by weight of dye,
3-18 % by weight of an anionic dispersant of the general formula 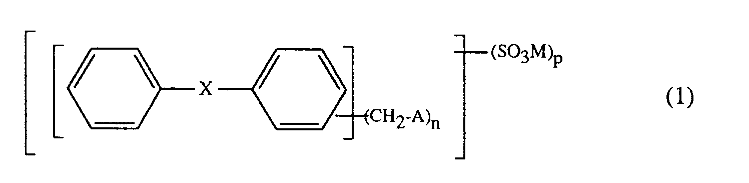 in which
X is a direct bond or oxygen
A is hydrogen or the radical of an aromatic compound, which is bound to the methylene group via a ring carbon atom and has no hydroxyl or amino substituents
n and p, independently of one another, are each a number from 1 to 4 and
M is a monovalent cation, and
if appropriate, condensation products of these compounds with formaldehyde,
1-10 % by weight of sodium lactate,
1-10 % by weight of glycerol and/or propylene glycol,
0.1-5.0 % by weight of a compound having monomer units of the general formula 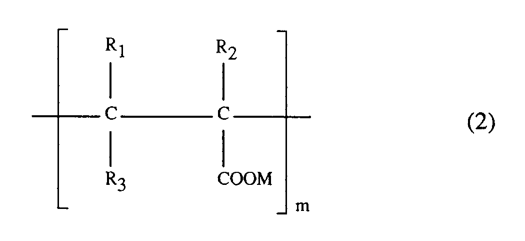 in which
R₁ is H, C₁-C₃alkyl, COOM
R₂ is H, C₁-C₃alkyl,
R₃ is H, C₁-C₃alkyl, CH₂COOM
M is a monovalent cation and
m is a number from 8-1000,
3-10 % by weight of betaine monohydrate,
0-4 % by weight of a compound having monomer units of the general formula 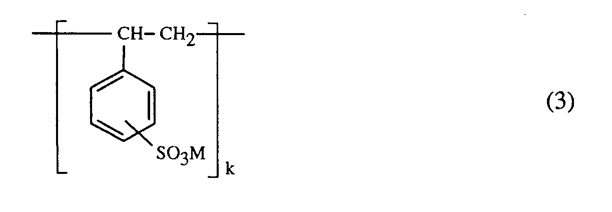 in which M is a monovalent cation and
k is a number from 50 to 3000, and
0.1-15 % by weight of customary auxiliaries.

2. An aqueous dye preparation according to claim 1, which contains
15-40 % by weight of disperse dye,
3-18 % by weight of an anionic dispersant of the general formula 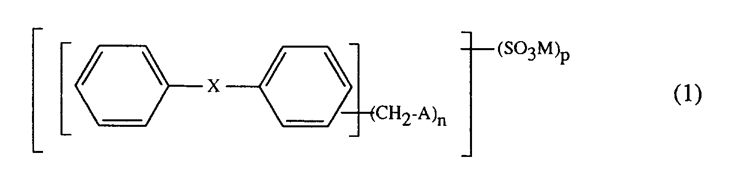 in which
X is a direct bond or oxygen
A is the radical of an aromatic compound, which is bound to the methylene group via a ring carbon atom and has no hydroxyl or amino substituents
n and p, independently of one another, are each a number from 1 to 4 and
M is a monovalent cation,
1-10 % by weight of sodium lactate
1-10 % by weight of glycerol and/or propylene glycol
0.1-5.0 % by weight of a compound having monomer units of the general formula 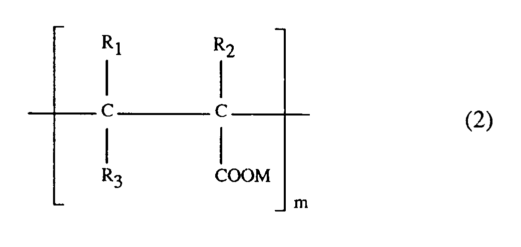 in which
R₁ is H, C₁-C₃alkyl, COOM
R₂ is H, C₁-C₃alkyl,
R₃ is H, C₁-C₃alkyl, CH₂COOM
M is a monovalent cation and
m is a number from 8-1000,
3-10 % by weight of betaine monohydrate,
0-4 % by weight of a compound having monomer units of the general formula 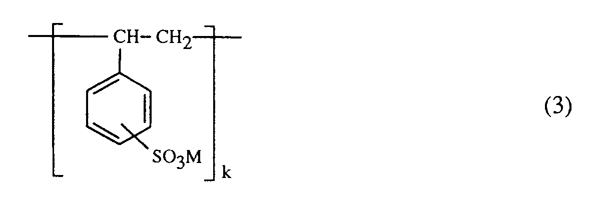 in which M is a monovalent cation and
k is a number from 50 to 3000, and
0.1-15 % by weight of customary auxiliaries.

3. An aqueous dye preparation according to claim 2, wherein the anionic dispersant has the general formula 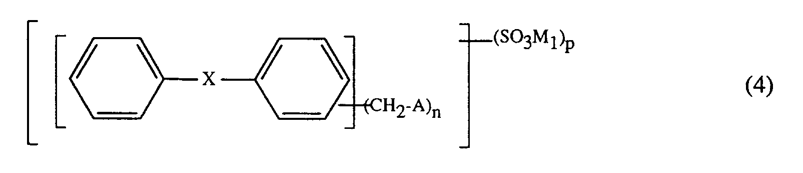 in which
X is a direct bond or oxygen,
A is the radical of an aromatic compound which is bound to the methylene group via a ring carbon atom and has no hydroxyl or amino substituents,
n and p, independently of one another, are each a number from 1 to 4 and
M₁ is Na, K, Li or triethanolamine.

4. An aqueous dye preparation according to claim 3, wherein the anionic dispersant has the general formula 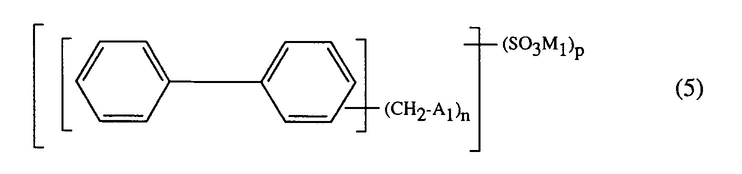 in which
A₁ is the radical of an aromatic hydrocarbon which is bound to the methylene group via a ring carbon atom and has no hydroxyl or amino substituents,
n and p, independently of one another, are each a number from 1 to 4 and
M₁ is Na, K, Li or triethanolamine.

5. An aqueous dye preparation according to claim 4, wherein the anionic dispersant has the general formula 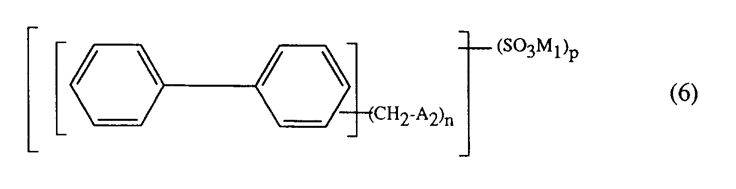 in which
A₂ is a naphthalene radical which is bound to the methylene group via a ring carbon atom and has no hydroxyl or amino substituents,
n and p, independently of one another are each a number from 1 to 4 and
M₁ is Na, K, Li or triethanolamine.

6. An aqueous dye preparation according to either of claims 1 or 2, wherein the anionic dispersant of the formula (1) has a carbon to organically bound sulfur ratio > 15:1 and the amount of electrolyte in the dry dispersant, expressed as Na₂SO₄, is less than 1 % by weight.

7. An aqueous dye preparation according to either of claims 1 or 2, wherein the compound of the general formula (2) is sodium polyacrylate, sodium polymethacrylate, sodium polymaleate, mixtures thereof or copolymers thereof having a molecular weight between 1,000 and 100,000.

8. An aqueous dye preparation according to claim 7, wherein the compound of the general formula (2) is sodium polyacrylate, sodium polymethacrylate, sodium polymaleate, mixtures thereof or copolymers thereof having a molecular weight between 1,000 and 30,000.

9. An aqueous dye preparation according to either of claims 1 or 2, wherein the sum of the mixture of sodium lactate and glycerol and/or propylene glycol amounts to 7-12 % by weight of the dye preparation.

10. An aqueous dye preparation according to either of claims 1 or 2, wherein the compounds of the general formula (3) have a molecular weight between 400,000 and 600,000, calculated as the sodium salts.

11. An aqueous dye preparation according to either of claims 1 or 2, which contains
15-40 % by weight of disperse dye,
3-18 % by weight of the anionic dispersant of the general formula 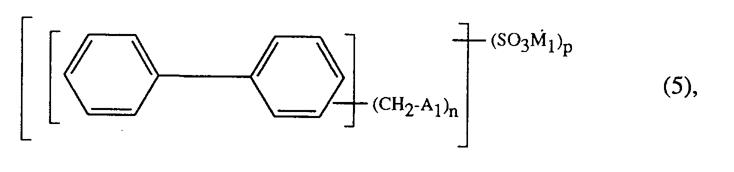 in which
A₁ is the radical of an aromatic hydrocarbon which is bound to the methylene group via a ring carbon atom and has no hydroxyl or amino substituents,
n and p, independently of one another, are each a number from 1 to 4 and M₁ is Na, K, Li or triethanolamine,
1-10 % by weight of sodium lactate,
1-10 % by weight of glycerol and/or propylene glycol,
0.1-5 % by weight of sodium polyacrylate, sodium polymethacrylate, sodium polymaleate, mixtures thereof or
copolymers thereof having a molecular weight between 1,000 and 100,000,
3-10 % by weight of betaine monohydrate,
0-4 % by weight of a compound having monomer units of the general formula 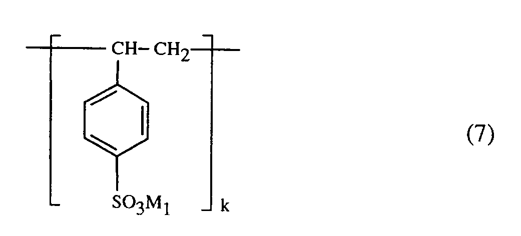 in which
M₁ is Na, K, Li, triethanolamine and k is a number from 50 to 3000, and
0.5-15 % by weight of customary auxiliaries.

12. An aqueous dye preparation according to claim 11, which contains
18-32 % by weight of disperse dye,
5-12 % by weight of the anionic dispersant of the general formula 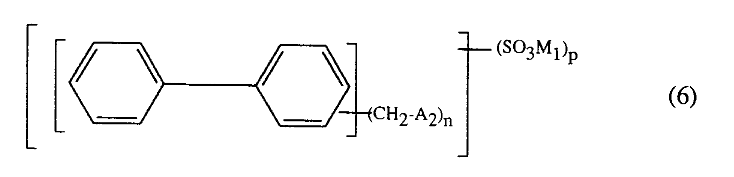 in which
A₂ is a naphthalene radical which is bound to the methylene group via a ring carbon atom and has no hydroxyl or amino substituents,
n and p, independently of one another, are each a number from 1 to 4,
M₁ is Na, K, Li or triethanolamine,
7-12 % by weight of a mixture of sodium lactate and glycerol and/or 1,2-propylene glycol,
1-3 % by weight of sodium polyacrylate having a molecular weight between 1,000 and 30,000,
5-9 % by weight of betaine monohydrate,
0-1 % by weight of sodium polystyrenesulfonate having a molecular weight between 400,000 and 600,000, and
0.1-5 % by weight of customary auxiliaries.

13. An aqueous dye preparation according to claim 1, wherein the preparations additionally contain a further dye as the dye which is insoluble to sparingly soluble in water.

14. An aqueous dye preparation according to claim 13, wherein the further dye is a reactive dye.

15. A process for the preparation of an aqueous dye preparation according to any one of claims 1-14, which comprises milling the dye which is insoluble to sparingly soluble in water in water with addition of the anionic dispersant of the general formula (1) down to a particle size of less than 10 », the remaining components being added before, during or after the milling process.

16. Use of an aqueous dye preparation according to any one of claims 1-14 for the preparation of dye liquors or printing pastes for the dyeing or printing of synthetic textiles or mixtures thereof with natural fibres.

17. Use of an aqueous dye preparation according to any one of claims 1-14 for the continuous dyeing of polyester textile materials or mixtures thereof with cellulose textile materials.

18. The textile material dyed with a dye preparation according to any one of claims 1-14.

## Claims (Claims for the following Contracting State(s): ES)

1. A process for the preparation of an aqueous dye preparation of a dye insoluble to sparingly soluble in water, which comprises milling
15-40 % by weight of dye,
3-18 % by weight of an anionic dispersant of the general formula 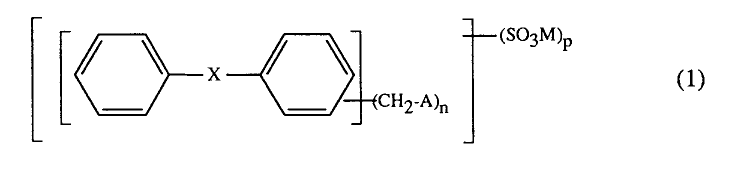 in which
X is a direct bond or oxygen
A is hydrogen or the radical of an aromatic compound, which is bound to the methylene group via a ring carbon atom and has no hydroxyl or amino substituents
n and p, independently of one another, are each a number from 1 to 4 and
M is a monovalent cation, and
if appropriate, condensation products of these compounds with formaldehyde,
down to a particle size of less than 10» with the addition of
1-10 % by weight of sodium lactate,
1-10 % by weight of glycerol and/or propylene glycol,
0.1-5.0 % by weight of a compound having monomer units of the general formula 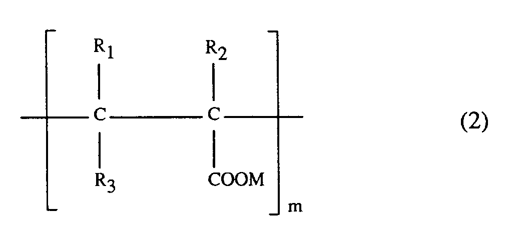 in which
R₁ is H, C₁-C₃alkyl, COOM
R₂ is H, C₁-C₃alkyl,
R₃ is H, C₁-C₃alkyl, CH₂COOM
M is a monovalent cation and
m is a number from 8-1000,
3-10 % by weight of betaine monohydrate,
0-4 % by weight of a compound having monomer units of the general formula 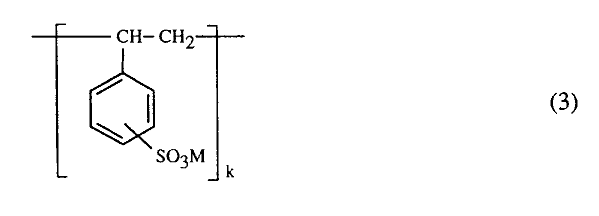 in which M is a monovalent cation and
k is a number from 50 to 3000, and
0.1-15 % by weight of customary auxiliaries before, during or after the milling process.

2. A process according to claim 1, wherein
15-40 % by weight of disperse dye,
3-18 % by weight of an anionic dispersant of the general formula 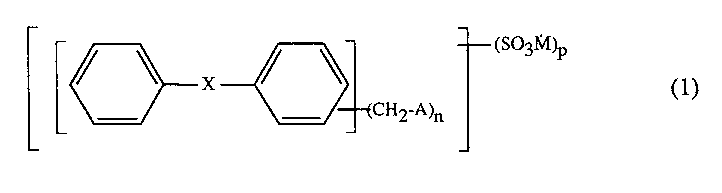 in which
X is a direct bond or oxygen
A is the radical of an aromatic compound, which is bound to the methylene group via a ring carbon atom and has no hydroxyl or amino substituents
n and p, independently of one another, are each a number from 1 to 4 and
M is a monovalent cation,
1-10 % by weight of sodium lactate
1-10 % by weight of glycerol and/or propylene glycol
0.1-5.0 % by weight of a compound having monomer units of the general formula 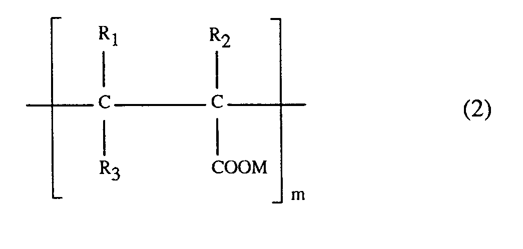 in which
R₁ is H, C₁-C₃alkyl, COOM
R₂ is H, C₁-C₃alkyl,
R₃ is H, C₁-C₃alkyl, CH₂COOM
M is a monovalent cation and
m is a number from 8-1000,
3-10 % by weight of betaine monohydrate,
0-4 % by weight of a compound having monomer units of the general formula 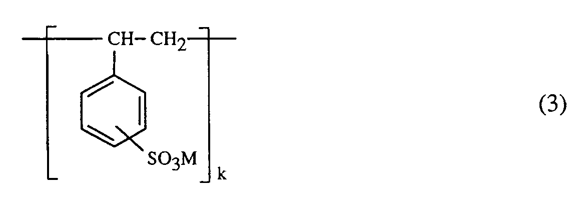 in which M is a monovalent cation and
k is a number from 50 to 3000, and
0.1-15 % by weight of customary auxiliaries are used.

3. A process according to claim 2, wherein the anionic dispersant has the general formula 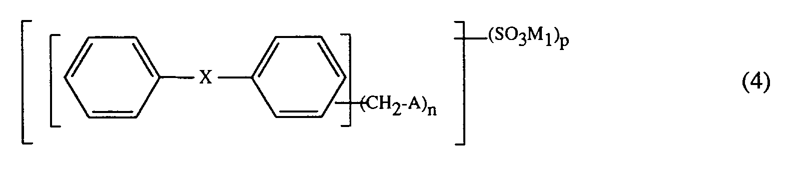 in which
X is a direct bond or oxygen,
A is the radical of an aromatic compound which is bound to the methylene group via a ring carbon atom and has no hydroxyl or amino substituents,
n and p, independently of one another, are each a number from 1 to 4 and
M₁ is Na, K, Li or triethanolamine.

4. A process according to claim 3, wherein the anionic dispersant has the general formula 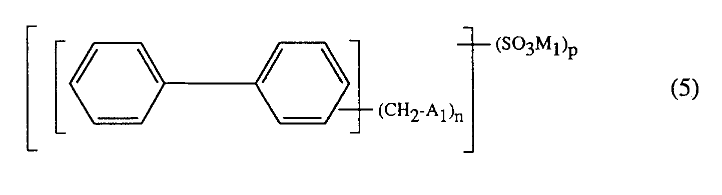 in which
A₁ is the radical of an aromatic hydrocarbon which is bound to the methylene group via a ring carbon atom and has no hydroxyl or amino substituents,
n and p, independently of one another, are each a number from 1 to 4 and
M₁ is Na, K, Li or triethanolamine.

5. An process according to claim 4, wherein the anionic dispersant has the general formula 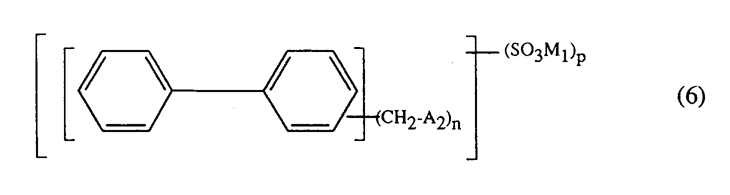 in which
A₂ is a naphthalene radical which is bound to the methylene group via a ring carbon atom and has no hydroxyl or amino substituents,
n and p, independently of one another are each a number from 1 to 4 and
M₁ is Na, K, Li or triethanolamine.

6. A process according to either of claims 1 or 2, wherein the anionic dispersant of the formula (1) has a carbon to organically bound sulfur ratio > 15:1 and the amount of electrolyte in the dry dispersant, expressed as Na₂SO₄, is less than 1 % by weight.

7. A process according to either of claims 1 or 2, wherein the compound of the general formula (2) is sodium polyacrylate, sodium polymethacrylate, sodium polymaleate, mixtures thereof or copolymers thereof having a molecular weight between 1,000 and 100,000.

8. A process according to claim 7, wherein the compound of the general formula (2) is sodium polyacrylate, sodium polymethacrylate, sodium polymaleate, mixtures thereof or copolymers thereof having a molecular weight between 1,000 and 30,000.

9. A process according to either of claims 1 or 2, wherein the sum of the mixture of sodium lactate and glycerol and/or propylene glycol amounts to 7-12 % by weight of the dye preparation.

10. A process according to either of claims 1 or 2, wherein the compounds of the general formula (3) have a molecular weight between 400,000 and 600,000, calculated as the sodium salts.

11. A process according to either of claims 1 or 2, wherein
15-40 % by weight of disperse dye,
3-18 % by weight of the anionic dispersant of the general formula 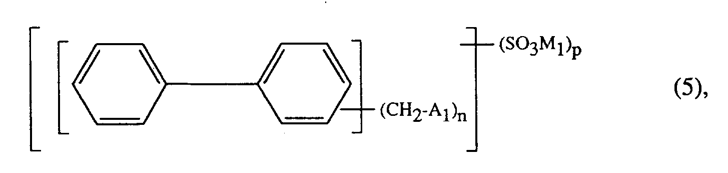 in which
A₁ is the radical of an aromatic hydrocarbon which is bound to the methylene group via a ring carbon atom and has no hydroxyl or amino substituents,
n and p, independently of one another, are each a number from 1 to 4 and M₁ is Na, K, Li or triethanolamine,
1-10 % by weight of sodium lactate,
1-10 % by weight of glycerol and/or propylene glycol,
0.1-5 % by weight of sodium polyacrylate, sodium polymethacrylate, sodium polymaleate, mixtures thereof or
copolymers thereof having a molecular weight between 1,000 and 100,000,
3-10 % by weight of betaine monohydrate,
0-4 % by weight of a compound having monomer units of the general formula 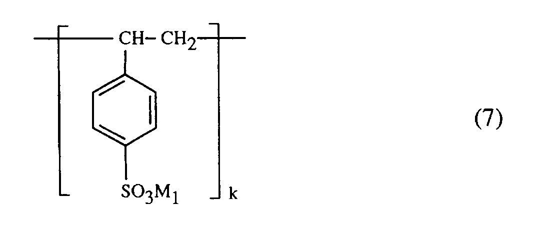 in which
M₁ is Na, K, Li, triethanolamine and k is a number from 50 to 3000, and
0.5-15 % by weight of customary auxiliaries are used.

12. A process according to claim 11, wherein
18-32 % by weight of disperse dye,
5-12 % by weight of the anionic dispersant of the general formula 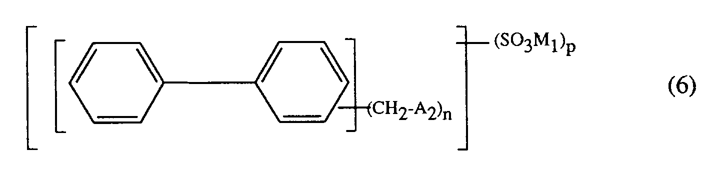 in which
A₂ is a naphthalene radical which is bound to the methylene group via a ring carbon atom and has no hydroxyl or amino substituents,
n and p, independently of one another, are each a number from 1 to 4,
M₁ is Na, K, Li or triethanolamine,
7-12 % by weight of a mixture of sodium lactate and glycerol and/or 1,2-propylene glycol,
1-3 % by weight of sodium polyacrylate having a molecular weight between 1,000 and 30,000,
5-9 % by weight of betaine monohydrate,
0-1 % by weight of sodium polystyrenesulfonate having a molecular weight between 400,000 and 600,000, and
0.1-5 % by weight of customary auxiliaries are used.

13. A process according to claim 1, wherein a further dye is additionally used as a dye which is insoluble to sparingly soluble in water.

14. A process according to claim 13, wherein the further dye is a reactive dye.

15. Use of an aqueous dye preparation prepared according to any one of claims 1-14 for the preparation of dye liquors or printing pastes for the dyeing or printing of synthetic textiles or mixtures thereof with natural fibres.

16. Use of an aqueous dye preparation prepared according to any one of claims 1-14 for the continuous dyeing of polyester textile materials or mixtures thereof with cellulose textile materials.

17. The textile material dyed with a dye preparation prepared according to any one of claims 1-14.

## Revendications (Revendications pour l'(les) Etat(s) contractant(s) suivant(s): AT, CH, DE, FR, GB, IT, LI)

1. Formulations aqueuses de colorants insolubles à peu solubles dans l'eau, caractérisées en ce qu'elles contiennent :
de 15 à 40 % en poids de colorant,
de 3 à 18 % en poids d'un dispersant anionique de formule générale 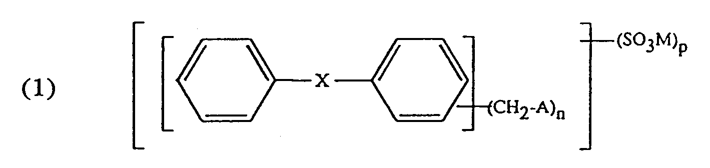 dans laquelle
X représente une liaison directe ou un atome d'oxygène,
A représente un atome d'hydrogène ou le reste d'un composé aromatique, relié au groupe méthylène par un atome de carbone du cycle et ne portant pas de substituant hydroxy ou amino,
n et p représentent chacun, indépendamment l'un de l'autre, un nombre valant de 1 à 4, et
M représente un cation monovalent,
et le cas échéant, des produits de condensation de composés de ce type avec du formaldéhyde,
de 1 à 10 % en poids de lactate de sodium,
de 1 à 10 % en poids de glycérine et/ou de propylèneglycol,
de 0,1 à 5,0 % en poids d'un composé dont les motifs monomères correspondent à la formule générale 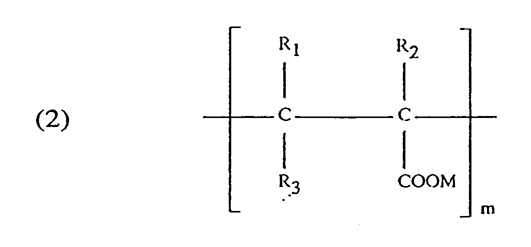 dans laquelle
R₁ représente H, un groupe alkyle en C₁₋₃ ou COOM,
R₂ représente H ou un groupe alkyle en C₁₋₃,
R₃ représente H, un groupe alkyle en C₁₋₃ ou CH₂COOM,
M représente un cation monovalent, et
m représente un nombre valant de 8 à 1000,
de 3 à 10 % en poids de monohydrate de bétaïne,
de 0 à 4 % en poids d'un composé dont les motifs monomères correspondent à la formule générale 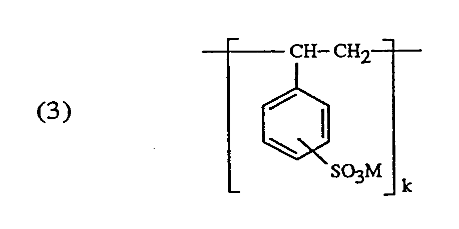 dans laquelle
M représente un cation monovalent, et
k représente un nombre valant de 50 à 3000,
et de 0,1 à 15 % en poids d'adjuvants habituels.

2. Formulations aqueuses de colorants, conformes à la revendication 1, caractérisées en ce qu'elles contiennent :
de 15 à 40 % en poids d'un colorant dispersé,
de 3 à 18 % en poids d'un dispersant anionique de formule générale 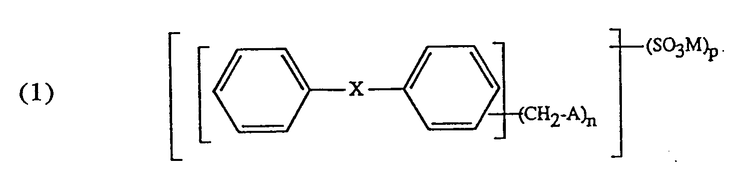 dans laquelle
X représente une liaison directe ou un atome d'oxygène,
A représente le reste d'un composé aromatique, relié au groupe méthylène par un atome de carbone du cycle et ne portant pas de substituant hydroxy ou amino,
n et p représentent chacun, indépendamment l'un de l'autre, un nombre valant de 1 à 4, et
M représente un cation monovalent,
de 1 à 10 % en poids de lactate de sodium,
de 1 à 10 % en poids de glycérine et/ou de propylèneglycol,
de 0,1 à 5,0 % en poids d'un composé dont les motifs monomères correspondent à la formule générale 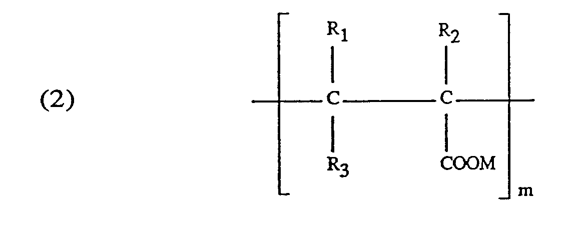 dans laquelle
R₁ représente H, un groupe alkyle en C₁₋₃ ou COOM,
R₂ représente H ou un groupe alkyle en C₁₋₃,
R₃ représente H, un groupe alkyle en C₁₋₃ ou CH₂COOM,
M représente un cation monovalent, et
m représente un nombre valant de 8 à 1000,
de 3 à 10 % en poids de monohydrate de bétaïne,
de 0 à 4 % en poids d'un composé dont les motifs monomères correspondent à la formule générale 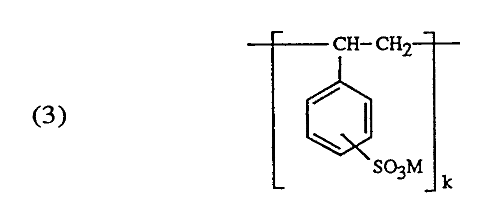 dans laquelle
M représente un cation monovalent, et
k représente un nombre valant de 50 à 3000,
et de 0,1 à 15 % en poids d'adjuvants habituels.

3. Formulations aqueuses de colorants, conformes à la revendication 2, caractérisées en ce que le dispersant anionique correspond à la formule générale 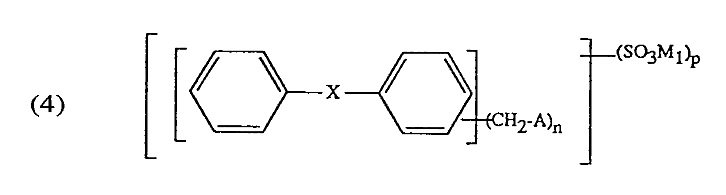 dans laquelle
X représente une liaison directe ou un atome d'oxygène,
A représente le reste d'un composé aromatique, relié au groupe méthylène par un atome de carbone du cycle et ne portant pas de substituant hydroxy ou amino,
n et p représentent chacun, indépendamment l'un de l'autre, un nombre valant de 1 à 4, et
M₁ représente Na, K, Li ou triéthanolamine.

4. Formulations aqueuses de colorants, conformes à la revendication 3, caractérisées en ce que le dispersant anionique correspond à la formule générale 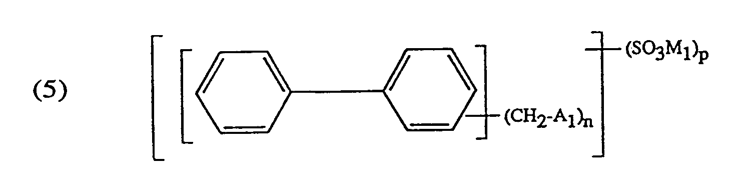 dans laquelle
A₁ représente le reste d'un composé aromatique, relié au groupe méthylène par un atome de carbone du cycle et ne portant pas de substituant hydroxy ou amino,
n et p représentent chacun, indépendamment l'un de l'autre, un nombre valant de 1 à 4, et
M₁ représente Na, K, Li ou triéthanolamine.

5. Formulations aqueuses de colorants, conformes à la revendication 4, caractérisées en ce que le dispersant anionique correspond à la formule générale 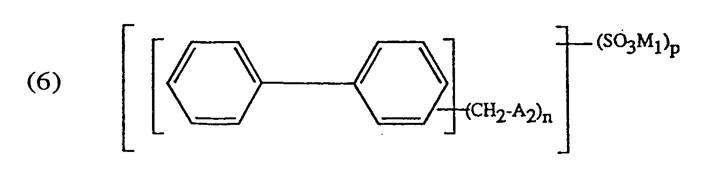 dans laquelle
A₂ représente un reste de naphtalène, relié au groupe méthylène par un atome de carbone du cycle et ne portant pas de substituant hydroxy ou amino,
n et p représentent chacun, indépendamment l'un de l'autre, un nombre valant de 1 à 4, et
M₁ représente Ma, K, Li ou triéthanolamine.

6. Formulations aqueuses de colorants, conformes à la revendication 1 ou 2, caractérisées en ce que, dans le dispersant anionique de formule (1), le rapport du carbone au soufre à liaison organique est supérieur à 15/1, et en ce que la proportion d'électrolyte présent dans le dispersant sec, exprimée en Na₂SO₄, vaut moins de 1 % en poids.

7. Formulations aqueuses de colorants, conformes à la revendication 1 ou 2, caractérisées en ce que le composé de formule générale (2) est un polyacrylate de sodium, un polyméthacrylate de sodium, un polymaléate de sodium, un mélange de ces composés ou un de leurs copolymères, dont la masse moléculaire vaut entre 1000 et 100 000.

8. Formulations aqueuses de colorants, conformes à la revendication 7, caractérisées en ce que le composé de formule générale (2) est un polyacrylate de sodium, un polyméthacrylate de sodium, un polymaléate de sodium, un mélange de ces composés ou un de leurs copolymères, dont la masse moléculaire vaut entre 1000 et 30 000.

9. Formulations aqueuses de colorants, conformes à la revendication 1 ou 2, caractérisées en ce que le total du mélange de lactate de sodium et de glycérine et/ou de propylèneglycol représente de 7 à 12 % en poids de la formulation de colorant.

10. Formulations aqueuses de colorants, conformes à la revendication 1 ou 2, caractérisées en ce que la masse moléculaire du composé de formule générale (3), calculée pour le sel de sodium, vaut entre 400 000 et 600 000.

11. Formulations aqueuses de colorants, conformes à la revendication 1, caractérisées en ce qu'elles contiennent :
de 15 à 40 % en poids d'un colorant dispersé,
de 3 à 18 % en poids d'un dispersant anionique de formule générale 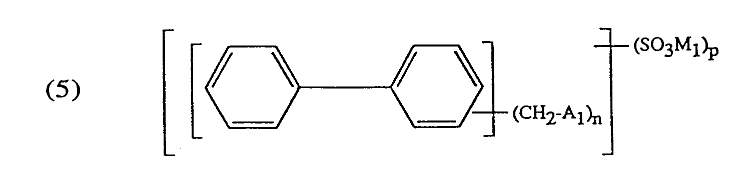 dans laquelle
A₁ représente le reste d'un composé aromatique, relié au groupe méthylène par un atome de carbone du cycle et ne portant pas de substituant hydroxy ou amino,
n et p représentent chacun, indépendamment l'un de l'autre, un nombre valant de 1 à 4, et
M₁ représente Ma, K, Li ou triéthanolamine,
de 1 à 10 % en poids de lactate de sodium,
de 1 à 10 % en poids de glycérine et/ou de propylèneglycol,
de 0,1 à 5,0 % en poids d'un polyacrylate de sodium, d'un polyméthacrylate de sodium, d'un polymaléate de sodium, d'un mélange de ces composés ou d'un de leurs copolymères, dont la masse moléculaire vaut entre 1000 et 100 000,
de 3 à 10 % en poids de monohydrate de bétaïne,
de 0 à 4 % en poids d'un composé dont les motifs monomères correspondent à la formule générale 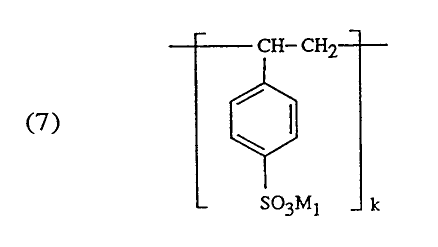 dans laquelle
M₁ représente Na, K, Li ou triéthanolamine, et
k représente un nombre valant de 50 à 3000,
et de 0,1 à 15 % en poids d'adjuvants habituels.

12. Formulations aqueuses de colorants, conformes à la revendication 11, caractérisées en ce qu'elles contiennent :
de 18 à 32 % en poids d'un colorant dispersé,
de 5 à 12 % en poids d'un dispersant anionique de formule générale 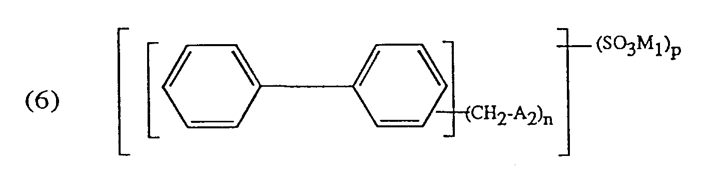 dans laquelle
A₂ représente un reste de naphtalène, relié au groupe méthylène par un atome de carbone du cycle et ne portant pas de substituant hydroxy ou amino,
n et p représentent chacun, indépendamment l'un de l'autre, un nombre valant de 1 à 4, et
M₁ représente Na, K, Li ou triéthanolamine,
de 7 à 12 % en poids d'un mélange de lactate de sodium et de glycérine et/ou de 1,2-propylèneglycol,
de 1 à 3 % en poids d'un polyacrylate de sodium dont la masse moléculaire vaut entre 1000 et 30 000,
de 5 à 9 % en poids de monohydrate de bétaïne,
de 0 à 1 % en poids d'un polystyrénesulfonate de sodium dont la masse moléculaire vaut entre 400 000 et 600 000,
et de 0,1 à 5 % en poids d'adjuvants habituels.

13. Formulations aqueuses de colorants, conformes à la revendication 1, caractérisées en ce que les formulations contiennent en outre un autre colorant qu'un colorant insoluble à peu soluble dans l'eau.

14. Formulations aqueuses de colorants, conformes à la revendication 13, caractérisées en ce que l'autre colorant est un colorant réactif.

15. Procédé de préparation de formulations aqueuses de colorants, conformes à l'une des revendications 1 à 14, caractérisé en ce que l'on broie, dans de l'eau, le colorant insoluble à peu soluble dans l'eau, après y avoir ajouté un dispersant anionique de formule générale (1), jusqu'à ce que la taille des particules vaille moins de 10 »m, les autres composants étant ajoutés avant, pendant ou après cette opération de broyage.

16. Emploi des formulations aqueuses de colorants conformes à l'une des revendications 1 à 14, pour la préparation de bains de teinture ou de pâtes d'impression destinés à la teinture ou l'impression de textiles synthétiques ou de leurs mélanges avec des fibres naturelles.

17. Emploi des formulations aqueuses de colorants conformes à l'une des revendications 1 à 14, pour la teinture en mode continu de matières textiles en polyester ou de leurs mélanges avec des matières textiles cellulosiques.

18. Matières textiles teintes à l'aide des formulations de colorants conformes à l'une des revendications 1 à 14.

## Revendications (Revendications pour l'(les) Etat(s) contractant(s) suivant(s): ES)

1. Procédé de préparation de formulations aqueuses de colorants insolubles à peu solubles dans l'eau, caractérisé en ce que l'on broie :
de 15 à 40 % en poids de colorant;
de 3 à 18 % en poids d'un dispersant anionique de formule générale 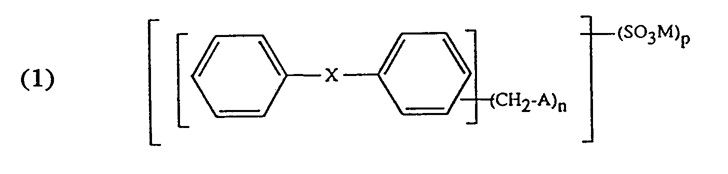 dans laquelle
X représente une liaison directe ou un atome d'oxygène,
A représente un atome d'hydrogène ou le reste d'un composé aromatique, relié au groupe méthylène par un atome de carbone du cycle et ne portant pas de substituant hydroxy ou amino,
n et p représentent chacun, indépendamment l'un de l'autre, un nombre valant de 1 à 4, et
M représente un cation monovalent,
et le cas échéant, des produits de condensation de composés de ce type avec du formaldéhyde,
jusqu'à ce que la taille des particules vaille moins de 10 »m, en ajoutant, avant, pendant ou après cette opération de broyage :
de 1 à 10 % en poids de lactate de sodium,
de 1 à 10 % en poids de glycérine et/ou de propylèneglycol,
de 0,1 à 5,0 % en poids d'un composé dont les motifs monomères correspondent à la formule générale 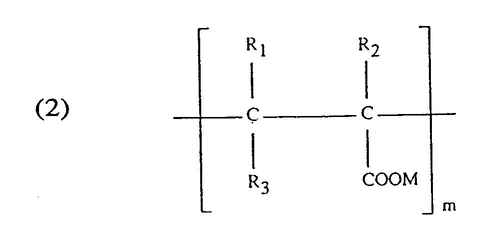 dans laquelle
R₁ représente H, un groupe alkyle en C₁₋₃ ou COOM,
R₂ représente H ou un groupe alkyle en C₁₋₃,
R₃ représente H, un groupe alkyle en C₁₋₃ ou CH₂COOM,
M représente un cation monovalent, et
m représente un nombre valant de 8 à 1000,
de 3 à 10 % en poids de monohydrate de bétaïne,
de 0 à 4 % en poids d'un composé dont les motifs monomères correspondent à la formule générale 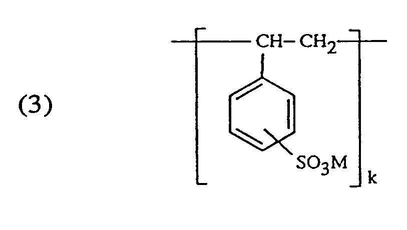 dans laquelle
M représente un cation monovalent, et
k représente un nombre valant de 50 à 3000,
et de 0,1 à 15 % en poids d'adjuvants habituels.

2. Procédé conforme à la revendication 1, caractérisé en ce qu'on utilise :
de 15 à 40 % en poids d'un colorant dispersé,
de 3 à 18 % en poids d'un dispersant anionique de formule générale 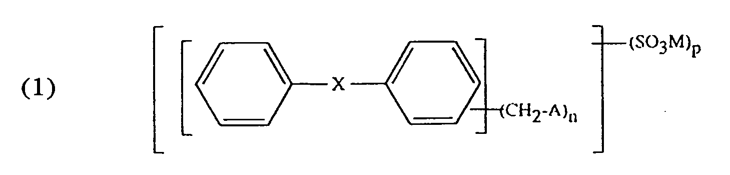 dans laquelle
X représente une liaison directe ou un atome d'oxygène,
A représente le reste d'un composé aromatique, relié au groupe méthylène par un atome de carbone du cycle et ne portant pas de substituant hydroxy ou amino,
n et p représentent chacun, indépendamment l'un de l'autre, un nombre valant de 1 à 4, et
M représente un cation monovalent,
de 1 à 10 % en poids de lactate de sodium,
de 1 à 10 % en poids de glycérine et/ou de propylèneglycol,
de 0,1 à 5,0 % en poids d'un composé dont les motifs monomères correspondent à la formule générale 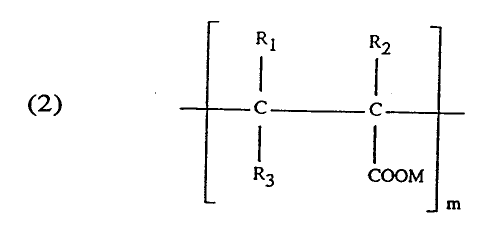 dans laquelle
R₁ représente H, un groupe alkyle en C₁₋₃ ou COOM,
R₂ représente H ou un groupe alkyle en C₁₋₃,
R₃ représente H, un groupe alkyle en C₁₋₃ ou CH₂COOM,
M représente un cation monovalent, et
m représente un nombre valant de 8 à 1000,
de 3 à 10 % en poids de monohydrate de bétaïne,
de 0 à 4 % en poids d'un composé dont les motifs monomères correspondent à la formule générale 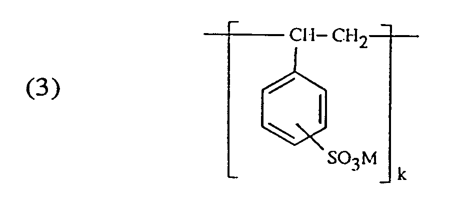 dans laquelle
M représente un cation monovalent, et
k représente un nombre valant de 50 à 3000,
et de 0,1 à 15 % en poids d'adjuvants habituels.

3. Procédé conforme à la revendication 2, caractérisé en ce que le dispersant anionique correspond à la formule générale 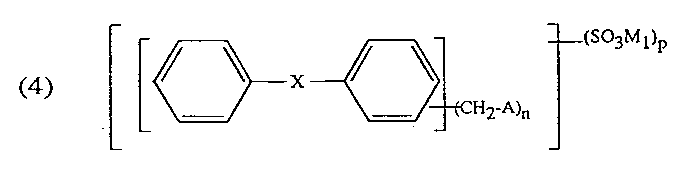 dans laquelle
X représente une liaison directe ou un atome d'oxygène,
A représente le reste d'un composé aromatique, relié au groupe méthylène par un atome de carbone du cycle et ne portant pas de substituant hydroxy ou amino,
n et p représentent chacun, indépendamment l'un de l'autre, un nombre valant de 1 à 4, et
M₁ représente Na, K, Li ou triéthanolamine.

4. Procédé conforme à la revendication 3, caractérisé en ce que le dispersant anionique correspond à la formule générale 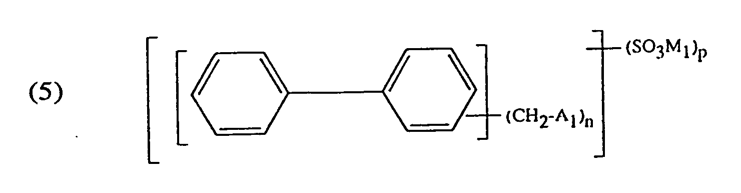 dans laquelle
A₁ représente le reste d'un composé aromatique relié au groupe méthylène par un atome de carbone du cycle et ne portant pas de substituant hydroxy ou amino,
n et p représentent chacun, indépendamment l'un de l'autre, un nombre valant de 1 à 4, et
M₁ représente Na, K, Li ou triéthanolamine.

5. Procédé conforme à la revendication 4, caractérisé en ce que le dispersant anionique correspond à la formule générale 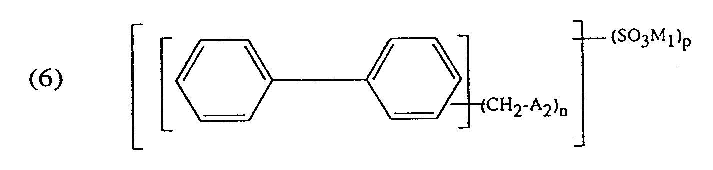 dans laquelle
A₂ représente un reste de naphtalène, relié au groupe méthylène par un atome de carbone du cycle et ne portant pas de substituant hydroxy ou amino,
n et p représentent chacun, indépendamment l'un de l'autre, un nombre valant de 1 à 4, et
M₁ représente Na, K, Li ou triéthanolamine.

6. Procédé conforme à la revendication 1 ou 2, caractérisé en ce que, dans le dispersant anionique de formule (1), le rapport du carbone au soufre à liaison organique est supérieur à 15/1, et en ce que la proportion d'électrolyte présent dans le dispersant sec, exprimée en Na₂SO₄, vaut moins de 1 % en poids.

7. Procédé conforme à la revendication 1 ou 2, caractérisé en ce que le composé de formule générale (2) est un polyacrylate de sodium, un polyméthacrylate de sodium, un polymaléate de sodium, un mélange de ces composés ou un de leurs copolymères, dont la masse moléculaire vaut entre 1000 et 100 000.

8. Formulations aqueuses de colorants, conformes à la revendication 7, caractérisées en ce que le composé de formule générale (2) est un polyacrylate de sodium, un polyméthacrylate de sodium, un polymaléate de sodium, un mélange de ces composés ou un de leurs copolymères, dont la masse moléculaire vaut entre 1000 et 30 000.

9. Procédé conforme à la revendication 1 ou 2, caractérisé en ce que le total du mélange de lactate de sodium et de glycérine et/ou de propylèneglycol représente de 7 à 12 % en poids de la formulation de colorant.

10. Procédé conforme à la revendication 1 ou 2, caractérisé en ce que la masse moléculaire du composé de formule générale (3), calculée pour le sel de sodium, vaut entre 400 000 et 600 000.

11. Procédé conforme à la revendication 1 ou 2, caractérisé en ce qu'on utilise :
de 15 à 40 % en poids d'un colorant dispersé,
de 3 à 18 % en poids d'un dispersant anionique de formule générale 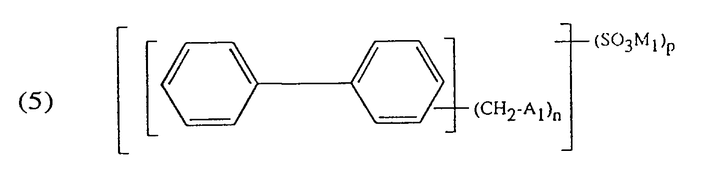 dans laquelle
A₁ représente le reste d'un composé aromatique, relié au groupe méthylène par un atome de carbone du cycle et ne portant pas de substituant hydroxy ou amino,
n et p représentent chacun, indépendamment l'un de l'autre, un nombre valant de 1 à 4, et
M₁ représente Na, K, Li ou triéthanolamine,
de 1 à 10 % en poids de lactate de sodium,
de 1 à 10 % en poids de glycérine et/ou de propylèneglycol,
de 0,1 à 5,0 % en poids d'un polyacrylate de sodium, d'un polyméthacrylate de sodium, d'un polymaléate de sodium, d'un mélange de ces composés ou d'un de leurs copolymères, dont la masse moléculaire vaut entre 1000 et 100 000,
de 3 à 10 % en poids de monohydrate de bétaïne,
de 0 à 4 % en poids d'un composé dont les motifs monomères correspondent à la formule générale 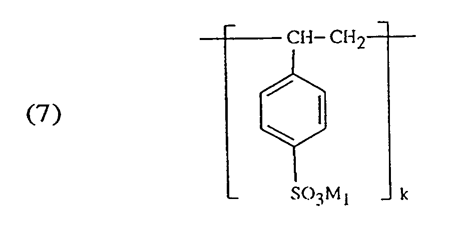 dans laquelle
M₁ représente Na, K, Li ou triéthanolamine, et
k représente un nombre valant de 50 à 3000,
et de 0,1 à 15 % en poids d'adjuvants habituels.

12. Procédé conforme à la revendication 11, caractérisé en ce qu'on utilise :
de 18 à 32 % en poids d'un colorant dispersé,
de 5 à 12 % en poids d'un dispersant anionique de formule générale 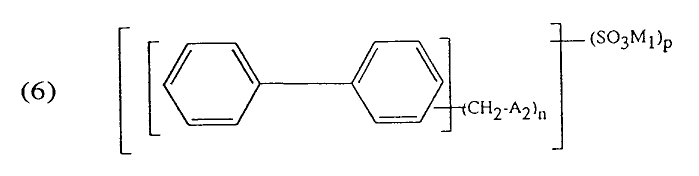 dans laquelle
A₂ représente un reste de naphtalène, relié au groupe méthylène par un atome de carbone du cycle et ne portant pas de substituant hydroxy ou amino,
n et p représentent chacun, indépendamment l'un de l'autre, un nombre valant de 1 à 4, et
M₁ représente Na, K, Li ou triéthanolamine,
de 7 à 12 % en poids d'un mélange de lactate de sodium et de glycérine et/ou de 1,2-propylèneglycol,
de 1 à 3 % en poids d'un polyacrylate de sodium dont la masse moléculaire vaut entre 1000 et 30 000,
de 5 à 9 % en poids de monohydrate de bétaïne,
de 0 à 1 % en poids d'un polystyrénesulfonate de sodium dont la masse moléculaire vaut entre 400 000 et 600 000,
et de 0,1 à 5 % en poids d'adjuvants habituels.

13. Procédé conforme à la revendication 1, caractérisé en ce qu'on utilise en outre un autre colorant qu'un colorant insoluble à peu soluble dans l'eau.

14. Procédé conforme à la revendication 13, caractérisé en ce que l'autre colorant est un colorant réactif.

15. Emploi des formulations aqueuses de colorants préparées conformément à l'une des revendications 1 à 14, pour la préparation de bains de teinture ou de pâtes d'impression destinés à la teinture ou l'impression de textiles synthétiques ou de leurs mélanges avec des fibres naturelles.

16. Emploi des formulations aqueuses de colorants préparées conformément à l'une des revendications 1 à 14, pour la teinture en mode continu de matières textiles en polyester ou de leurs mélanges avec des matières textiles cellulosiques.

17. Matières textiles teintes à l'aide des formulations de colorants préparées conformément à l'une des revendications 1 à 14.
